(19) Europäisches Patentamt
European Patent Office
Office européen des brevets

(11) EP 3 805 824 B1

# (12) EUROPEAN PATENT SPECIFICATION

(45) Date of publication and mention of the grant of the patent:
**09.10.2024 Bulletin 2024/41**

(21) Application number: **19811489.4**

(22) Date of filing: **29.05.2019**

(51) International Patent Classification (IPC):
***G02B 5/30*** (2006.01) ***B42D 25/391*** (2014.01)
***G02B 5/22*** (2006.01) ***G02B 5/26*** (2006.01)
***G02B 5/28*** (2006.01) ***B42D 25/351*** (2014.01)
***B42D 25/364*** (2014.01)

(52) Cooperative Patent Classification (CPC):
**G02B 5/3016; B42D 25/351; B42D 25/364; B42D 25/391; G02B 5/223; G02B 5/26; G02B 5/285**

(86) International application number:
**PCT/JP2019/021255**

(87) International publication number:
**WO 2019/230782 (05.12.2019 Gazette 2019/49)**

(54) **IDENTIFICATION MEDIUM, AND METHOD FOR DETERMINING AUTHENTICITY OF IDENTIFICATION MEDIUM**

IDENTIFIKATIONSMEDIUM UND VERFAHREN ZUR ECHTHEITSBESTIMMUNG EINES IDENTIFIKATIONSMEDIUMS

SUPPORT D'IDENTIFICATION, ET PROCÉDÉ DE DÉTERMINATION DE L'AUTHENTICITÉ D'UN SUPPORT D'IDENTIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2018 JP 2018105549**

(43) Date of publication of application:
**14.04.2021 Bulletin 2021/15**

(73) Proprietor: **Zeon Corporation**
**Tokyo 100-8246 (JP)**

(72) Inventor: **AIMATSU, Masashi**
**Tokyo 100-8246 (JP)**

(74) Representative: **Maiwald GmbH**
**Elisenhof**
**Elisenstraße 3**
**80335 München (DE)**

(56) References cited:
**EP-A1- 0 720 753**
**WO-A1-2017/018468**
**JP-A- 2001 180 200**
**JP-A- 2010 134 333**
**JP-A- 2010 134 333**
**JP-A- 2010 196 005**
**JP-A- 2012 215 762**
**JP-A- 2016 004 487**
**JP-B2- 5 229 056**
**US-A- 4 705 356**
**US-A1- 2007 229 928**
**US-A1- 2008 054 621**

- **ANONYMOUS: "Technical Information Paliocolor LC 242 and LC 756", 1 September 2002 (2002-09-01), XP055884293, Retrieved from the Internet <URL:http://www.elecs-korea.com/board/file/1116949999.pdf> [retrieved on 20220127]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field

The present invention relates to an identification medium and a method for identifying authenticity of an identification medium.

### Background

An identification medium is attached onto an article to identify authenticity of an identification medium for the purpose of preventing forgery of the article.

A cholesteric liquid crystal resin is obtained by cholesterically orienting a liquid crystal compound and curing the oriented compound with its orientation maintained. A cholesteric liquid crystal resin film or a cholesteric liquid crystal resin pigment has a circular polarized light separation function to reflect one of counterclockwise and clockwise circular polarized light and transmit the other. It is known that in such a film or pigment, the wavelength of reflected circular polarized light shifts to the short wavelength side as the viewing angle θ from the front direction increases. By taking advantage of this characteristic, a cholesteric liquid crystal resin can be used in an identification medium to identify authenticity of the identification medium.

For example, a known ink composition having improved forgery prevention properties includes a pigment in which the wavelength of reflected light shifts from the blue region to the ultraviolet region as a viewing angle θ from a front direction increases and a pigment in which the wavelength of reflected light shifts from the infrared region to the red region. In the ink composition, the color of observed reflected light changes from the blue region to the red region (Patent Literature 1). Another known identification medium has a structure that includes superimposed layers each shifting the wavelength of reflected light (Patent Literature 2). Similar identification medium devices are known in the art (Patent Literature 3, Patent Literature 4, Patent Literature 5, Patent Literature 6). Further prior art (Patent Literature 7) discloses an absorptive layer above a reflective multilayer interference coating. The absorptive layer modifies both the colour at normal incidence and the colour shift with angle of the multilayer interference coating.

### Citation List

#### Patent Literature

Patent Literature 1: Japanese Patent Application Laid-Open No. 2010-196005 A
Patent Literature 2: Japanese Patent Application Laid-Open No. 2010-134333 A Patent Literature 3: US 2008/054621 A1
Patent Literature 4: JP 5 229056 B2
Patent Literature 5: JP 2012 215762 A
Patent Literature 6: EP 0 720 753 A1
Patent Literature 7: US 4 705 356 A


### Summary

#### Technical Problem

In confirming that reflected light from an identification medium shifts from the short wavelength side to the long wavelength side by observing the reflected light from the identification medium while increasing a viewing angle θ from a front direction, a viewing angle at which reflected light shifts from the short wavelength side to the long wavelength side is preferably as small as possible, from the viewpoint of immediately identifying authenticity of the identification medium.

Therefore, there are demands for: an identification medium in which the color of observed reflected light shifts from the short wavelength side to the long wavelength side as a viewing angle θ from a front direction increases and in which a viewing angle at which reflected light shifts from the short wavelength side to the long wavelength side is small; and a method for identifying authenticity of such an identification medium.

## Solution to Problem

The present inventor intensively conducted research for solving the aforementioned problem. As a result, the present inventor has found that a viewing angle at which reflected light from an identification medium shifts from the short wavelength side to the long wavelength side can be reduced when an average value of the light transmittance of a layer positioned on the viewing side of the identification medium at a wavelength of 400 nm or longer and 425 nm or shorter is within a particular range. Thus, the present invention has been completed.
That is, the present invention provides the different types of identification medium defined in independent claims 1, 4 and 5. Further, the present invention provides the method for identifying authenticity of an identification medium defined by independent claim 10. The dependent claims define preferred embodiments of the invention.

## Advantageous Effects of Invention

According to the present invention, there can be provided: an identification medium in which the color of observed reflected light shifts from the short wavelength side to the long wavelength side as a viewing angle $\theta$ from a front direction increases and in which a viewing angle at which reflected light shifts from the short wavelength side to the long wavelength side is small; and a method for identifying authenticity of such an identification medium.

## Brief Description of Drawings

FIG. 1 is a cross-sectional view schematically illustrating an identification medium according to a first embodiment of the present invention.
FIG. 2 is a cross-sectional view schematically illustrating an identification medium according to a second embodiment of the present invention.
FIG. 3 is a cross-sectional view schematically illustrating an identification medium according to a third embodiment of the present invention.
FIG. 4 is a cross-sectional view schematically illustrating an identification medium according to a fourth embodiment of the present invention.

## Description of Embodiments

Hereinafter, the present invention will be described in detail with reference to embodiments and examples. However, the present invention is not limited to the following embodiments and examples, and may be freely modified for implementation without departing from the scope of claims of the present invention.
In the following description, an in-plane retardation Re of a layer is a value represented by Re = (nx - ny) $\times$ d unless otherwise specified. Herein, nx represents a refractive index in a direction in which the maximum refractive index is given among in-plane directions of the layer, ny represents a refractive index in a direction, among the above-mentioned in-plane directions of the layer, perpendicular to the direction giving nx, and d represents the thickness of the layer. The in-plane directions represent directions perpendicular to the thickness direction of the layer. A birefringence $\Delta$n is a value represented by $\Delta$n = Re/d.
In the following description, the measurement wavelength of refractive index is 590 nm, unless otherwise specified.
In the following description, unless otherwise specified, a "composition" includes not only a mixture of two or more substances, but also a material composed only of a single substance, and an "agent" includes not only a material composed only of a single substance but also a mixture of two or more substances.
In the following description, the term "(meth)acrylate" includes "acrylate", "methacrylate", and a combination thereof, unless otherwise specified. Also, the term "(meth)acrylic" includes "acrylic", "methacrylic", and a combination thereof. The term "(thio)epoxy" includes "epoxy", "thioepoxy", and a combination thereof. Moreover, the term "iso(thio)cyanate" includes "isocyanate", "isothiocyanate", and a combination thereof.

### [1. Identification medium]

### [1.1. First embodiment of identification medium]

An identification medium according to a first embodiment of the present invention includes a first resin layer and a second resin layer in this order from a viewing side. The first resin layer contains a first cholesteric liquid crystal

resin that is a cured product of a first liquid crystal composition. The first cholesteric liquid crystal resin selectively reflects light at a wavelength of 700 nm or longer and 900 nm or shorter. The second resin layer contains a second cholesteric liquid crystal resin that is a cured product of a second liquid crystal composition. The second cholesteric liquid crystal resin selectively reflects light at a wavelength of 400 nm or longer and 500 nm or shorter. The first resin layer has an average value of the light transmittance at a wavelength of 400 nm or longer and 425 nm or shorter of 80% or more and 88% or less.

FIG. 1 is a cross-sectional view schematically illustrating an identification medium according to the first embodiment of the present invention. An identification medium 100 is disposed on a surface of an article 10. The identification medium 100 includes a first resin layer 110 and a second resin layer 120. The first resin layer 110 is placed on the viewing side, and the second resin layer 120 is placed on the article 10 side. The identification medium 100 and the article 10 constitute an identification article 20.

The first resin layer 110 contains the first cholesteric liquid crystal resin that selectively reflects light at a wavelength of 700 nm or longer and 900 nm or shorter. Specifically, the first resin layer 110 is a layer of the first cholesteric liquid crystal resin. In the present embodiment, the first resin layer is a monolayer body constituted by a single material. However, as described in the following second embodiment, the first resin layer of the present invention may be a multilayer body. The first resin layer according to the present invention may contain an optional layer other than the layer containing the first cholesteric liquid crystal resin.

The second resin layer 120 contains the second cholesteric liquid crystal resin that selectively reflects light at a wavelength of 400 nm or longer and 500 nm or shorter. Specifically, the second resin layer 120 is a layer of the second cholesteric liquid crystal resin.

[Cholesteric liquid crystal resin]

The first cholesteric liquid crystal resin selectively reflects light at a wavelength of 700 nm or longer and 900 nm or shorter. The second cholesteric liquid crystal resin selectively reflects light at a wavelength of 400 nm or longer and 500 nm or shorter.

In the following description, the cholesteric liquid crystal resin means a resin material having cholesteric regularity. The resin material having cholesteric regularity refers to a resin material in which constituent molecules of the resin material or portions of the molecules are aligned in a state in which they have cholesteric regularity in the resin material.

Herein, when molecules in a resin "have cholesteric regularity", this means that molecules in the resin have the following specific regularity. When molecules in a resin has cholesteric regularity, the molecules are aligned in such an aspect as to form multiple molecular layers in the resin. In each of the molecular layers, molecules are aligned such that the molecular axes are in a certain orientation direction. With respect to an orientation direction in a first plane inside a resin layer, an orientation direction in the next second plane superimposed on the first plane is displaced by a slight angle. An orientation direction in the next third plane further superimposed on the second plane is displaced from the orientation direction in the second plane by further a slight angle. In this manner, in a plurality of planes superimposed and aligned, angles of the molecular axes of the planes are sequentially displaced (twisted). Such a structure that the directions of molecular axes are sequentially twisted in this manner comes to be an optically chiral structure.

The cholesteric liquid crystal resin having an optically chiral structure usually has a circular polarized light selective reflection function to selectively reflect circular polarized light. When the cholesteric liquid crystal resin "selectively reflects" light in a prescribed wavelength range, this means that it reflects one circular polarized light component of non-polarized light (that is, natural light) in a prescribed wavelength range and transmits the other circular polarized light component. The wavelength range of this circular polarized light to be selectively reflected is called a selective reflection band.

When the cholesteric liquid crystal resin is observed at a viewing angle $\theta$ from a front direction, a center wavelength $\lambda$ (nm) of the selective reflection band is represented by the following formula. In the formula, n is the average refractive index of the cholesteric liquid crystal resin, and P (nm) is the pitch length of the chiral structure (helical structure) of the cholesteric liquid crystal resin.

$$\lambda = n \times P \times \cos\theta$$

Therefore, the center wavelength $\lambda$ of the selective reflection band when the cholesteric liquid crystal resin is observed at a viewing angle $\theta$ from a front direction ($\cos\theta < 1$) is shorter than the center wavelength $\lambda$ of the selective reflection band when observed in a front direction ($\cos\theta = 1$).

Herein, the cholesteric liquid crystal resin may be in a form of either a thin film or a powder. When the form of the cholesteric liquid crystal resin is a powder, the center wavelength $\lambda$ of the selective reflection band is the center

wavelength of the selective reflection band observed when a thin film containing a powder was formed.

The front direction of the cholesteric liquid crystal resin refers to the normal direction of a thin film when the form of the cholesteric liquid crystal resin is a thin film. When the form of the cholesteric liquid crystal resin is a powder, the front direction refers to the normal direction of a thin film when a thin film containing a powder was formed.

The first cholesteric liquid crystal resin selectively reflects light at a wavelength of 700 nm or longer and 900 nm or shorter. That is, in the first cholesteric liquid crystal resin, the center wavelength of the selective reflection band when the viewing angle θ from the front direction is 5° is 700 nm or longer and 900 nm or shorter. Light at a wavelength of 700 nm or longer and 900 nm or shorter overlaps with the infrared region and cannot be or is less likely to be visually recognized by a human. Therefore, when the first cholesteric liquid crystal resin is observed while increasing the viewing angle θ from the front direction, the center wavelength of the selective reflection band shifts from the range of 700 nm or longer and 900 nm or shorter to the short wavelength side and becomes the center wavelength within a range that can be visually recognized by a human.

The second cholesteric liquid crystal resin selectively reflects light at a wavelength of 400 nm or longer and 500 nm or shorter. That is, in the second cholesteric liquid crystal resin, the center wavelength of the selective reflection band when the viewing angle θ from the front direction is 5° is 400 nm or longer and 500 nm or shorter. Light at a wavelength of 400 nm or longer and 500 nm or shorter overlaps with the violet region to the blue region of which range overlaps with the visible region and can usually be visually recognized by a human. When the second cholesteric liquid crystal resin is observed while increasing the viewing angle θ from the front direction, the center wavelength of the selective reflection band shifts from the visible region of 400 nm or longer and 500 nm or shorter to the short wavelength side and becomes the center wavelength within the ultraviolet region which cannot be visually recognized by a human or the center wavelength within a range that is less likely to be visually recognized by a human.

Thus, when the identification medium includes the first resin layer containing the first cholesteric liquid crystal resin and the second resin layer containing the second cholesteric liquid crystal resin, reflected light from the identification medium can shift to the long wavelength side as the viewing angle θ increases. Therefore, the forgery prevention function of such an identification medium can be strengthened, compared to an identification medium including only one type of cholesteric liquid crystal resin which shifts reflected light to the short wavelength side as the viewing angle θ increases.

In the first cholesteric liquid crystal resin, the center wavelength of the selective reflection band when the viewing angle θ from the front direction is 5° is usually 700 nm or longer, preferably 720 nm or longer, and more preferably 725 nm or longer, and is usually 900 nm or shorter, preferably 800 nm or shorter, and more preferably 770 nm or shorter. When the center wavelength of the selective reflection band of the first cholesteric liquid crystal resin is within the aforementioned range, reflected light from the first cholesteric liquid crystal resin is less likely to be visually recognized in the vicinity of the front direction and may shift from the infrared region to the visible region at a relatively small viewing angle.

In the second cholesteric liquid crystal resin, the center wavelength of the selective reflection band when the viewing angle θ from the front direction is 5° is usually 400 nm or longer, preferably 420 nm or longer, and more preferably 430 nm or longer, and is usually 500 nm or shorter, preferably 480 nm or shorter, and more preferably 470 nm or shorter. When the center wavelength of the selective reflection band of the second cholesteric liquid crystal resin is within the aforementioned range, reflected light in the blue region from the second cholesteric liquid crystal resin may be visually recognized in the vicinity of the front direction and may also shift from the blue region to the ultraviolet region at a relatively small viewing angle.

For example, the center wavelength λ of the selective reflection band of each of the first cholesteric liquid crystal resin and the second cholesteric liquid crystal resin can be increased by increasing the pitch length P of the helical structure and can be decreased by decreasing the pitch length P.

Examples of a method for adjusting the pitch length P of the cholesteric liquid crystal resin may include adjusting the type of a chiral agent and adjusting the amount of a chiral agent.

The center wavelength λ of the selective reflection band of the cholesteric liquid crystal resin may be determined by the following method.

First, a reflection spectrum at an incident angle of 5° of the cholesteric liquid crystal resin is measured. In the obtained reflection spectrum, a peak having a maximum strength is determined. An average value ($(\lambda 1 + \lambda 2)/2$) of a wavelength $\lambda 1$ on the short wavelength side of a peak and a wavelength $\lambda 2$ on the long wavelength side, exhibiting a strength that is 50% of the maximum strength, may be defined as the center wavelength λ of the selective reflection band of the cholesteric liquid crystal resin.

As a sample for measuring the reflection spectrum of the cholesteric liquid crystal resin, a liquid crystal resin layer formed of a thin film of the cholesteric liquid crystal resin may be used.

[Liquid crystal composition]

The first cholesteric liquid crystal resin and the second cholesteric liquid crystal resin are a cured product of

the first liquid crystal composition and a cured product of the second liquid crystal composition, respectively.

The liquid crystal composition is a material containing a liquid crystal compound. As the liquid crystal compound, a polymerizable liquid crystal compound is preferable. The liquid crystal composition containing a polymerizable liquid crystal compound can be easily cured while maintaining an orientation state by polymerizing the liquid crystal compound thereof.

As the liquid crystal compound, a cholesteric liquid crystal compound may be used. A cholesteric liquid crystal compound is a compound that can exhibit cholesteric liquid crystal properties. By using a liquid crystal composition containing such a cholesteric liquid crystal compound and curing the liquid crystal composition in a state of exhibiting a cholesteric liquid crystal phase, a cholesteric liquid crystal resin which is a resin material having cholesteric regularity can be obtained.

As the liquid crystal compound contained in the first liquid crystal composition and the second liquid crystal composition, for example, a rod-like liquid crystal compound having two or more reactive groups in one molecule may be used. Examples of this rod-like liquid crystal compound may include compounds represented by the formula (1) .

$$R^3\text{-}C^3\text{-}D^3\text{-}C^5\text{-}M\text{-}C^6\text{-}D^4\text{-}C^4\text{-}R^4 \qquad \text{Formula (1)}$$

In the formula (1), $R^3$ and $R^4$ are each a reactive group, and each independently represent a group selected from the group consisting of a (meth)acrylic group, a (thio)epoxy group, an oxetane group, a thietanyl group, an aziridinyl group, a pyrrole group, a vinyl group, an allyl group, a fumarate group, a cinnamoyl group, an oxazoline group, a mercapto group, an iso(thio)cyanate group, an amino group, a hydroxyl group, a carboxyl group, and an alkoxysilyl group. By having these reactive groups, a cholesteric liquid crystal resin having high strength can be obtained when the liquid crystal composition is cured.

In the formula (1), $D^3$ and $D^4$ each independently represent a group selected from the group consisting of a single bond, a linear or branched alkyl group having 1 to 20 carbon atoms, and a linear or branched alkylene oxide group having 1 to 20 carbon atoms.

In the formula (1), $C^3$ to $C^6$ each independently represent a group selected from the group consisting of a single bond, -O-, -S-, -S-S-, -CO-, -CS-, -OCO-, $-CH_2-$, - $OCH_2-$, -CH=N-N=CH-, -NHCO-, -O-(C=O)-O-, $-CH_2-(C=O)-O-$, and $-CH_2O-(C=O)-$.

In the formula (1), M represents a mesogenic group. Specifically, M represents a group in which two to four identical or different skeletons which may be unsubstituted or may have a substituent and which are selected from the group consisting of azomethines, azoxys, phenyls, biphenyls, terphenyls, naphthalenes, anthracenes, benzoic acid esters, cyclohexane carboxylic acid phenyl esters, cyanophenylcyclohexanes, cyano-substituted phenylpyrimidines, alkoxy-substituted phenylpyrimidines, phenyldioxanes, tolans, and alkenylcyclohexylbenzonitriles are bonded via a linking group such as -O-, -S-, -S-S-, - CO-, -CS-, -OCO-, $-CH_2-$, $-OCH_2-$, -CH=N-N=CH-, -NHCO-, -O-(C=O)-O-, $-CH_2-(C=O)-O-$, and $-CH_2O-(C=O)-$.

Examples of the substituents which the mesogenic group M may have may include a halogen atom, an alkyl group having 1 to 10 carbon atoms optionally having a substituent, a cyano group, a nitro group, $-O-R^5$, $-O-C(=O)-R^5$, $-C(=O)-OR^5$, $-O-C(=O)-O-R^5$, $-NR^5-C(=O)-R^5$, $-C(=O)-NR^5R^7$, and $-O-C(=O)-NR^5R^7$. Herein, $R^5$ and $R^7$ represent a hydrogen atom or an alkyl group having 1 to 10 carbon atoms. When $R^5$ and $R^7$ are an alkyl group, the alkyl group may contain the following group interposed therein: -O-, -S-, -O-C(=O)-, - C(=O)-O-, -O-C(=O)-O-, $-NR^6-C(=O)-$, $-C(=O)-NR^6-$, $-NR^6-$, or - C(=O)- (except the case where two or more -O-'s or two or more -S-'s are adjacently interposed). Herein, $R^6$ represents a hydrogen atom or an alkyl group having 1 to 6 carbon atoms.

Examples of the substituents in the aforementioned "alkyl group having 1 to 10 carbon atoms optionally having a substituent" may include a halogen atom, a hydroxyl group, a carboxyl group, a cyano group, an amino group, an alkoxy group having 1 to 6 carbon atoms, an alkoxyalkoxy group having 2 to 8 carbon atoms, an alkoxyalkoxyalkoxy group having 3 to 15 carbon atoms, an alkoxycarbonyl group having 2 to 7 carbon atoms, an alkylcarbonyloxy group having 2 to 7 carbon atoms, and an alkoxycarbonyloxy group having 2 to 7 carbon atoms.

Further, it is preferable that the rod-like liquid crystal compound has an asymmetric structure. Herein, the asymmetric structure refers to a structure in which $R^3\text{-}C^3\text{-}D^3\text{-}C^5\text{-}$ and $\text{-}C^6\text{-}D^4\text{-}C^4\text{-}R^4$ differ in the formula (1) with the mesogenic group M as its center. By using those having an asymmetric structure as the rod-like liquid crystal compound, the orientation uniformity can further be improved.

Preferable specific examples of the rod-like liquid crystal compound may include the following compounds (B1) to (B9). As these compounds, one type thereof may be solely used, and two or more types thereof may also be used in combination at any ratio.

[Chemical formula 1]

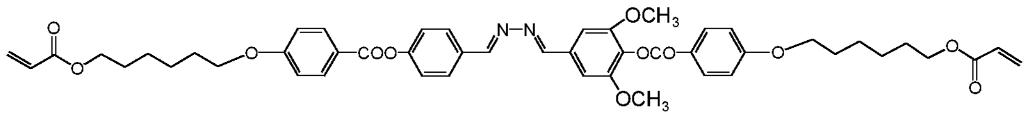
(B1)

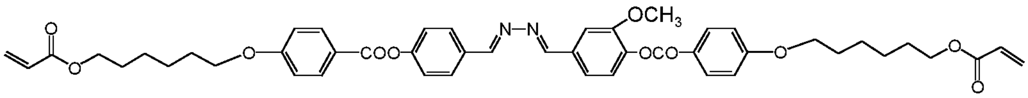
(B2)

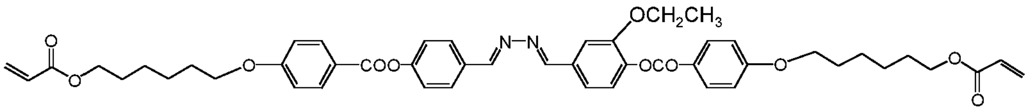
(B3)

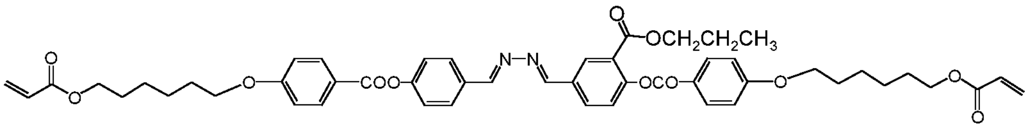
(B4)

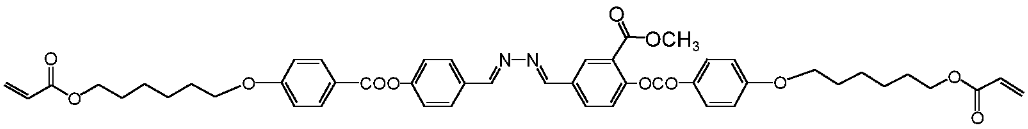
(B5)

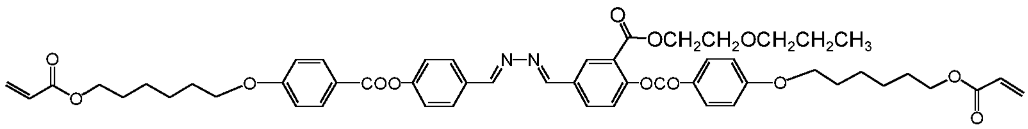
(B6)

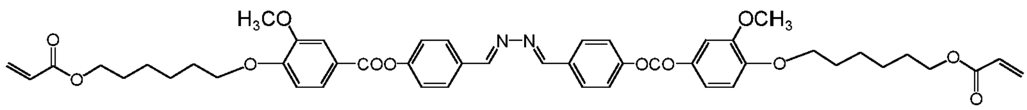
(B7)

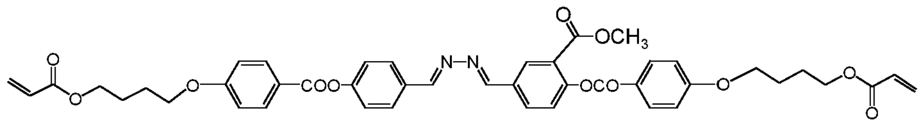
(B8)

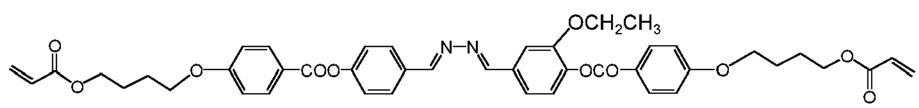
(B9)

The first liquid crystal composition and/or the second liquid crystal composition preferably contain, as a liquid crystal compound, a compound represented by the above-mentioned formula (1), and more preferably contain one or more types selected from the above-mentioned compounds (B1) to (B9). The compounds represented by the above-mentioned formula (1), in particular, the compounds (B1) to (B9) have characteristics of partially absorbing light at a wavelength of 400 nm or longer and 425 nm or shorter, so that the characteristics of selective reflection and light absorption can be simultaneously exhibited in the cholesteric liquid crystal resin.

In addition to the liquid crystal compound, the first liquid crystal composition and/or the second liquid crystal composition may include a compound represented by the following formula (2).

$$R^1\text{-}A^1\text{-}B\text{-}A^2\text{-}R^2 \qquad (2)$$

In the formula (2), $R^1$ and $R^2$ are each independently a group selected from the group consisting of a linear or

branched alkyl group having 1 to 20 carbon atoms, a linear or branched alkylene oxide group having 1 to 20 carbon atoms, a hydrogen atom, a halogen atom, a hydroxyl group, a carboxyl group, a (meta)acrylic group in which an optional linking group may be interposed, an epoxy group, a mercapto group, an isocyanate group, an amino group, and a cyano group.

The alkyl group and the alkylene oxide group may be unsubstituted or substituted with one or more halogen atoms. Further, the halogen atom, hydroxyl group, carboxyl group, (meta)acrylic group, epoxy group, mercapto group, isocyanate group, amino group, and cyano group may be bonded to an alkyl group having 1 to 2 carbon atoms, and an alkylene oxide group.

Preferable examples of $R^1$ and $R^2$ may include a halogen atom, a hydroxyl group, a carboxyl group, a (meth)acrylic group, an epoxy group, a mercapto group, an isocyanate group, an amino group, and a cyano group.

At least one of $R^1$ and $R^2$ is preferably a reactive group. By having a reactive group as at least one of $R^1$ and $R^2$, the compound represented by the above-mentioned formula (2) is fixed in the cholesteric liquid crystal resin at the time of curing, so that a stronger resin can be formed. Herein, examples of the reactive group may include a carboxyl group, a (meth)acrylic group, an epoxy group, a mercapto group, an isocyanate group, and an amino group.

In the formula (2), $A^1$ and $A^2$ each independently represent a group selected from the group consisting of a 1,4-phenylene group, a 1,4-cyclohexylene group, a cyclohexene-1,4-ylene group, a 4,4'-biphenylene group, a 4,4'-bicyclohexylene group, and a 2,6-naphthylene group. The 1,4-phenylene group, 1,4-cyclohexylene group, cyclohexene-1,4-ylene group, 4,4'-biphenylene group, 4,4'-bicyclohexylene group, and 2,6-naphthylene group may not be substituted or be substituted with one or more substituents such as a halogen atom, a hydroxyl group, a carboxyl group, a cyano group, an amino group, an alkyl group having 1 to 10 carbon atoms, or a halogenated alkyl group. When two or more substituents are present in each of $A^1$ and $A^2$, they may be the same or different.

Particularly preferable examples of $A^1$ and $A^2$ may include groups selected from the group consisting of a 1,4-phenylene group, a 4,4'-biphenylene group, and a 2,6-naphthylene group. These aromatic ring skeletons are relatively rigid compared to the alicyclic skeleton, and have high affinity to the mesogen of the rod-like liquid crystal compound, and bring about higher orientation uniformity.

In the formula (2), B is selected from the group consisting of a single bond, -O-, -S-, -S-S-, -CO-, -CS-, - OCO-, $-CH_2-$, $-OCH_2-$, -CH=N-N=CH-, -NHCO-, -O-(C=O)-O-, $-CH_2-(C=O)-O-$, and $-CH_2O-(C=O)-$.

Particularly preferable examples of B may include a single bond,-O-(C=O)-, and -CH=N-N=CH-.

Particularly preferable specific examples of the compound represented by the formula (2) may include the following compounds (A1) to (A10). As these compounds, one type thereof may be solely used, and two or more types thereof may also be used in combination at any ratio.

Among the following compounds (A1) to (A10), one or more types selected from the compounds (A2) and (A10) are particularly preferable from the viewpoint of lowering the expression temperature of the liquid crystal phase in the liquid crystal composition and making it difficult to narrow the temperature range in which the liquid crystal phase of the liquid crystal compound is exhibited.

[Chemical formula 2]

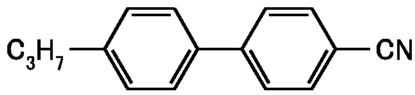 (A1)

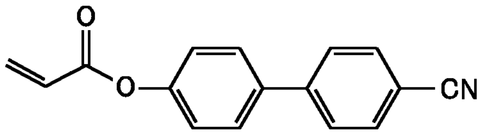 (A2)

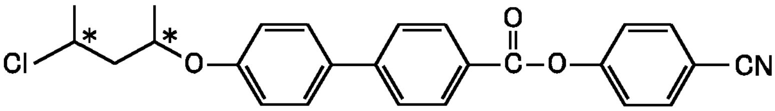 (A3)

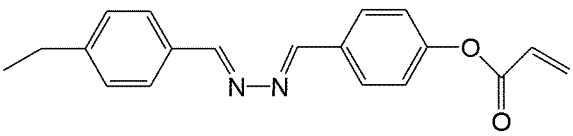 (A4)

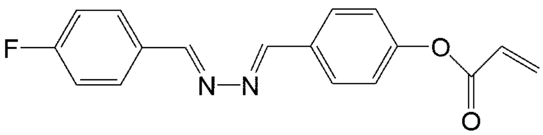 (A5)

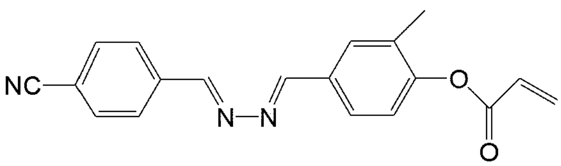 (A6)

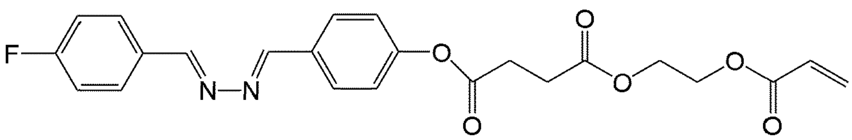 (A7)

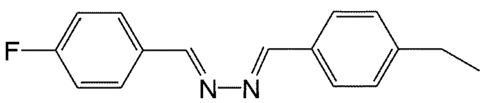 (A8)

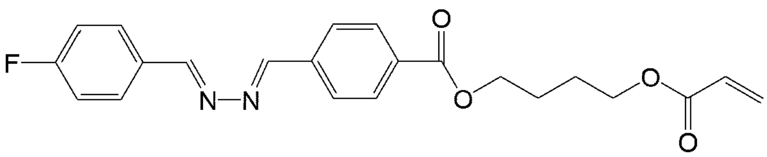 (A9)

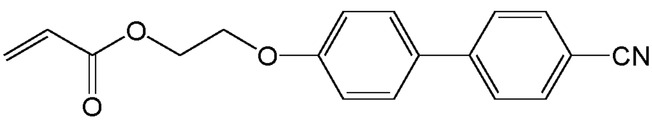 (A10)

In the above-mentioned compound (A3), "*" represents a chiral center.

In the first liquid crystal composition or the second liquid crystal composition, the weight ratio represented by (total weight of the compound represented by the formula (2))/(total weight of the rod-like liquid crystal compound) is preferably 0.05 or more, more preferably 0.1 or more, and particularly preferably 0.15 or more, and is preferably 1 or

less, more preferably 0.65 or less, and particularly preferably 0.55 or less. By setting the weight ratio to be equal to or higher than the lower limit value of the aforementioned range, the orientation uniformity of the liquid crystal composition can be enhanced. Further, by setting the weight ratio to be equal to or lower than the upper limit value, the orientation uniformity of the liquid crystal composition can be enhanced. Further, the stability of the liquid crystal phase of the liquid crystal composition can be enhanced. In addition, the birefringence $\Delta n$ of the liquid crystal composition can be increased. Herein, the total weight of the compound represented by the formula (2) indicates the weight thereof when only one type of compounds represented by the formula (2) is used, and indicates the total weight when two or more types thereof are used. Similarly, the total weight of the rod-like liquid crystal compound indicates the weight thereof when only one type of rod-like liquid crystal compounds is used, and indicates the total weight when two or more types thereof are used.

When the compound represented by the formula (2) and the rod-like liquid crystal compound are used in combination, the molecular weight of the compound represented by the formula (2) is preferably less than 600, and the molecular weight of the rod-like liquid crystal compound is preferably 600 or more. Thus, since the compound represented by the formula (2) can enter into the gap among the rod-like liquid crystal compounds having a molecular weight larger than that, the orientation uniformity can be improved.

The first liquid crystal composition and the second liquid crystal composition may each contain a chiral agent. Usually, the twisted direction of the cholesteric liquid crystal resin can be appropriately selected depending on the type and structure of the chiral agent used. Specific examples of the chiral agent appropriately used may include those disclosed in Japanese Patent Application Laid-Open No. 2005-289881 A, Japanese Patent Application Laid-Open No. 2004-115414 A, Japanese Patent Application Laid-Open No. 2003-66214, Japanese Patent Application Laid-Open No. 2003-313187, Japanese Patent Application Laid-Open No. 2003-342219, Japanese Patent Application Laid-Open No. 2000-290315, Japanese Patent Application Laid-Open No. Hei. 6-072962 A, U.S. Patent No. 6468444, International Publication No. 98/00428, and Japanese Patent Application Laid-Open No. 2007-176870 A. They may be available as for example, Paliocolor LC756 of BASF Corporation. As the chiral agents, one type thereof may be solely used, and two or more types thereof may also be used in combination at any ratio.

The amount of the chiral agent may be optionally set within a range in which the chiral agent does not reduce the desired optical performance. A specific amount of the chiral agent is usually 1% by weight to 60% by weight in the liquid crystal composition.

The first liquid crystal composition and the second liquid crystal composition may each contain a polymerization initiator. Examples of the polymerization initiator may include a photopolymerization initiator. A compound capable of generating a radical or an acid by ultraviolet or visible light can be used. Specific examples of the photopolymerization initiator may include benzoin, benzylmethyl ketal, benzophenone, biacetyl, acetophenone, Michler's ketone, benzyl, benzyl isobutyl ether, tetramethylthiuram mono(di)sulfide, 2,2-azobisisobutyronitrile, 2,2-azobis-2,4-dimethylvaleronitrile, benzoyl peroxide, di-tert-butyl peroxide, 1-hydroxycyclohexylphenyl ketone, 2-hydroxy-2-methyl-1-phenyl-propane-1-one, 1-(4-isopropylphenyl)-2-hydroxy-2-methylpropan-1-one, thioxanthone, 2-methylthioxanthone, 2,4-diethylthioxanthone, methylbenzoylformate, 2,2-diethoxyacetophenone, β-ionone, β-bromostyrene, diazoaminobenzene, α-amylcinnamic aldehyde, p-dimethylaminoacetophenone, p-dimethylaminopropiophenone, 2-chlorobenzophenone, p,p'-dichlorobenzophenone, p,p'-bisdiethylaminobenzophenone, benzoin ethyl ether, benzoin isopropyl ether, benzoin n-propyl ether, benzoin n-butyl ether, diphenyl sulfide, bis(2,6-methoxybenzoyl)-2,4,4-trimethyl-pentylphosphine oxide, 2,4,6-trimethylbenzoyldiphenyl-phosphine oxide, bis(2,4,6-trimethylbenzoyl)-phenylphosphine oxide, 2-methyl-1[4-(methylthio)phenyl]-2-morpholinopropan-1-one, 2-benzyl-2-dimethylamino-1-(4-morpholinophenyl)-butan-1-one, anthracenebenzophenone, α-chloroanthraquinone, diphenyl disulfide, hexachlorobutadiene, pentachlorobutadiene, octachlorobutene, 1-chloromethylnaphthalene, 1,2-octanedione-1-[4-(phenylthio)phenyl-2-(o-benzoyloxime)], a carbazole oxime compound such as 1-[9-ethyl-6-(2-methylbenzoyl)-9H-carbazole-3-yl]ethanone 1-(o-acetyloxime), (4-methylphenyl) [4-(2-methylpropyl)phenyl]iodonium hexafluorophosphate, 3-methyl-2-butynyl tetramethylsulfonium hexafluoroantimonate, and diphenyl-(p-phenylthiophenyl)sulfonium hexafluoroantimonate. As these compounds, one type thereof may be solely used, and two or more types thereof may also be used in combination at any ratio. Further, as necessary, a tertiary amine compound as a known photosensitizer or polymerization accelerator may be used to control curability.

The amount of the polymerization initiator is preferably 0.03% by weight to 7% by weight in the liquid crystal composition. By setting the amount of the polymerization initiator to be equal to or higher than the lower limit value of the aforementioned range, the degree of polymerization can be increased, so that mechanical strength of the cholesteric liquid crystal resin can be increased. By setting the amount thereof to be equal to or lower than the upper limit value, orientation of the liquid crystal compound can be favorably performed, so that the liquid crystal phase of the liquid crystal composition can be stabilized.

The first liquid crystal composition and the second liquid crystal composition may each contain a surfactant as a leveling agent. As the surfactant, for example, those which do not inhibit orientation may be appropriately selected and used. Preferable examples of such a surfactant may include a nonionic surfactant containing a siloxane or an alkyl fluoride group in a hydrophobic group moiety. Among these, an oligomer having 2 or more hydrophobic group moieties in one molecule is particularly suitable. Specific examples of these surfactants may include PF-151N, PF-636, PF-6320,

PF-656, PF-6520, PF-3320, PF-651, and PF-652 of PolyFox available from OMNOVA Co.; FTX-209F, FTX-208G, and FTX-204D of Ftergent available from NEOS Co.; and KH-40, S420 of Surflon available from Seimi Chemical Co. As these surfactants, one type thereof may be solely used, and two or more types thereof may also be used in combination at any ratio.

The amount of the surfactant is preferably set such that the amount of the surfactant in the cholesteric liquid crystal resin is 0.05% by weight to 3% by weight. By setting the amount of the surfactant to be equal to or more than the lower limit value of the aforementioned range, orientation regulating force at the air interface of the liquid crystal composition can be increased, so that orientation defects can be suppressed. Further, by setting the amount thereof to be equal to or lower than the upper limit value, surface defect of the resin layer due to the excessive surfactant that forms the micellar structure can be suppressed.

The first liquid crystal composition and the second liquid crystal composition may each further contain an optional component as necessary. Examples of the optional component may include a polymerization inhibitor for improving pot life; and an antioxidant, an ultraviolet absorber and a light stabilizer for improving durability. As these optional components, one type thereof may be solely used, and two or more types thereof may also be used in combination at any ratio. The amount of these optional components may be freely set within a range in which the optional component does not reduce the desired optical performance.

The method for producing the first liquid crystal composition and the second liquid crystal composition is not particularly limited, and the first liquid crystal composition and the second liquid crystal composition may each be produced by mixing the foregoing components.

[Birefringence $\Delta n$]

A birefringence $\Delta n1$ of the first liquid crystal composition or a birefringence $\Delta n2$ of the second liquid crystal composition is preferably less than 0.15. The birefringences $\Delta n1$ and $\Delta n2$ may be usually 0 or more.

When the birefringence $\Delta n1$ of the first liquid crystal composition is less than 0.15, the chroma of reflected light in the red region when the identification medium is observed in an oblique direction (viewing angle $\theta$ = 60°) can be further increased.

When the birefringence $\Delta n2$ of the second liquid crystal composition is less than 0.15, the chroma of reflected light in the blue region when the identification medium is observed at the viewing angle $\theta$ = 5° that is in the vicinity of the front direction can be further increased.

The chroma of reflected light may be measured by, for example, the following method.

A reflection spectrum at an incident angle of 5° of the identification medium is measured by a spectrophotometer. With the measured reflection spectrum R($\lambda$), tristimulus values X, Y, and Z are obtained, and lightness L*, a*, and b* of the CIE 1976 L*a*b* color space are calculated.

From the obtained values a* and b*, chroma C* is calculated according to the following (formula. 13).

[Mathematical Formula 1]

$$C^* = \sqrt{(a^*)^2 + (b^*)^2} \quad \text{(formula. 13)}$$

Herein, a birefringence $\Delta n$ of a liquid crystal composition means the $\Delta n$ of a resin obtained by homogeneously orienting a liquid crystal compound contained in the liquid crystal composition and then curing the resultant product with its orientation maintained. Although the liquid crystal composition may contain a chiral agent, the $\Delta n$ of the liquid crystal composition is a value measured for a resin obtained by curing the liquid crystal composition from which the chiral agent has been removed.

Specifically, the $\Delta n$ of the liquid crystal composition may be measured by the following method.

A layer (a layer of a homogeneous liquid crystal resin) is formed by forming a layer with a coating liquid for forming a layer of a cholesteric liquid crystal resin from which a chiral agent has been removed, homogeneously orienting a liquid crystal compound contained in the coating liquid, and then curing the resultant product with its orientation maintained. The $\Delta n$ of the formed layer is calculated by measuring an in-plane retardation Re and a thickness d of the layer. The $\Delta n$ of the layer is defined as the $\Delta n$ of the liquid crystal composition.

The in-plane retardation Re of the layer may be measured by a phase difference meter.

The thickness d of the layer may be measured by an optical interference film thickness meter or a contact film thickness meter.

[Twisted direction of cholesteric liquid crystal resin]

The twisted direction of the first cholesteric liquid crystal resin may be the same as or different from the twisted direction of the second cholesteric liquid crystal resin.

[Light transmittance of first resin layer]

The first resin layer has an average value of the light transmittance at a wavelength of 400 nm or longer and 425 nm or shorter of usually 80% or more and 88% or less, preferably 82% or more, and of preferably 87% or less. Herein, an average value of the light transmittance of the first resin layer at a wavelength of 400 nm or longer and 425 nm or shorter may be an arithmetic mean value $T_{AVE}$ obtained by measuring the light transmittance every 1 nm within the wavelength range of 400 nm to 425 nm for the first resin layer and calculating the arithmetic mean value $T_{AVE}$ according to the following formula. In the following formula, $T_\lambda$ represents the light transmittance at a wavelength $\lambda$. Herein, the light transmittance is a transmittance in the thickness direction of the first resin layer.

[Mathematical Formula 2]

$$T_{AVE} = \frac{\sum_{\lambda=400}^{425} T_\lambda}{26}$$

When the average value of the light transmittance of the first resin layer at a wavelength of 400 nm or longer and 425 nm or shorter is within the aforementioned range, a viewing angle at which reflected light from the identification medium shifts from the short wavelength side to the long wavelength side can be reduced.

The reason for this may include the followings. However, the reason does not limit the present invention. When the average value of the light transmittance of the first resin layer at a wavelength of 400 nm or longer and 425 nm or shorter is within the aforementioned range, incident light at a wavelength 400 nm or longer and 425 nm or shorter is absorbed when it passes through the first resin layer, which reduces light at 400 nm or longer and 425 nm or shorter reaching the second resin layer. The larger the incident angle of incident light, the longer the light path length of light passing through the first resin layer. Therefore, the larger the incident angle of incident light, the larger the reduction degree of this light. Also, light at a wavelength of 400 nm or longer and 425 nm or shorter is light in the ultraviolet region to the blue region. Therefore, although details are not known, reflected light from the identification medium is in the blue region when observed in the vicinity of the front direction, but light in the blue region reflected by the second resin layer rapidly decreases as the viewing angle $\theta$ increases. As a result, it is considered that, although the color region usually changes from blue to violet, which is a mixed color of blue and red, then to red as the viewing angle increases, reflected light from the identification medium shifts from the blue region to the red region at a small viewing angle while the violet region hardly appears.

[Layer thickness]

The thickness of the first resin layer 110 may be 0.5 $\mu$m or more and 10 $\mu$m or less.

The thickness of the second resin layer 120 may be 0.5 $\mu$m or more and 10 $\mu$m or less.

[Method for producing first resin layer and second resin layer]

The first resin layer 110 may be a thin film of the first cholesteric liquid crystal resin or may be a layer containing a powder of the first cholesteric liquid crystal resin as a pigment.

The second resin layer 120 may be a thin film of the second cholesteric liquid crystal resin or a layer containing a powder of the second cholesteric liquid crystal resin as a pigment.

The first resin layer 110 and the second resin layer 120 may be produced by, for example, the following method.

(Resin layer as thin film of cholesteric liquid crystal resin)

When the first resin layer 110 is a thin film of the first cholesteric liquid crystal resin, the first resin layer 110 as a thin film of the first cholesteric liquid crystal resin may be formed by applying a coating liquid containing the first liquid crystal composition and a solvent onto an appropriate support body, drying the resultant product as necessary to form a layer of the first liquid crystal composition, and curing this layer.

Prior to applying the coating liquid containing the first liquid crystal composition, a treatment may be performed for imparting an orientation regulation force onto the surface of the support body. Examples of such a treatment may include a rubbing treatment of the surface of the support body and a stretching treatment of the film of the support body. Also, a surface treatment such as a corona treatment may be performed for enhancing affinity between the surface of the support body and the first liquid crystal composition.

The support body may have an orientation film on its surface.

Application of the coating liquid containing the first liquid crystal composition may be performed by a known coating method. Examples of the application methods may include an extrusion coating method, a direct gravure coating method, a reverse gravure coating method, a die coating method, a spin coating method, and a bar coating method.

After the coating liquid containing the first liquid crystal composition is applied to form a layer of the first liquid crystal composition, an orientation treatment may be performed as necessary before the step of curing is performed. The orientation treatment may be performed, for example, by warming the layer of the first liquid crystal composition at 50 to 150°C for 0.5 to 10 minutes. By subjecting the orientation treatment to the layer, the liquid crystal compound in the first liquid crystal composition can be oriented well.

The treatment of curing the layer of the first liquid crystal composition may be performed by one or more times of energy ray irradiations. Examples of energy rays may include ultraviolet light, visible light, and other electromagnetic waves. Specifically, the energy beam irradiation may be performed by irradiating light at a wavelength of 200 to 500 nm for 0.01 second to 3 minutes, for example.

Even when the second resin layer 120 is a thin film of the second cholesteric liquid crystal resin, the second resin layer 120 which is a thin film of the second cholesteric liquid crystal resin may be formed by using the second liquid crystal composition instead of the first liquid crystal composition in the example of the method for producing the first resin layer 110 described above.

(Resin layer containing powder of cholesteric liquid crystal resin)

When the first resin layer 110 is a layer containing a powder of the first cholesteric liquid crystal resin as a pigment, the first resin layer 110 may be formed by, for example, preparing a coating liquid containing a powder of the first cholesteric liquid crystal resin and a suitable binder, forming a layer containing the powder of the first cholesteric liquid crystal resin by an appropriate coating method, and drying and/or curing the layer, as necessary.

Examples of the binder may include a polyesterbased polymer, an acryl-based polymer, a polystyrene-based polymer, a polyamide-based polymer, a polyurethane-based polymer, a polyolefin-based polymer, a polycarbonate-based polymer, and a polyvinyl-based polymer. As the binders, one type thereof may be solely used, and two or more types thereof may also be used in combination at any ratio. The binder may be, for example, a photocurable binder containing the foregoing polymer and a photopolymerization initiator and curing by irradiation with light (e.g., ultraviolet light).

The powder of the first cholesteric liquid crystal resin may be produced, for example, by a method in which a thin film of the first cholesteric liquid crystal resin is formed on a support body from the first liquid crystal composition by the foregoing method, and then a thin film of the first cholesteric liquid crystal resin is peeled from the support body and crushed.

The powder of the first cholesteric liquid crystal resin may take an optional shape as long as the powder of the first cholesteric liquid crystal resin exhibits a selective reflection function, and may be, for example, a flake. The thickness of the flake may be, for example, 0.5 μm or more and 10 μm or less.

The average particle diameter of the powder of the first cholesteric liquid crystal resin may be, for example, 1 μm or more and 500 μm or less.

The average particle diameter may be measured by the following method. First, several sieves with different openings are used to measure the proportion of powders passing through a sieve with a certain opening. Then, the particle size distribution of the powder is expressed by an integrated weight percentage from the size of the opening and the proportion of the powder passing through the sieve having the opening. In this particle size distribution, a particle size at an integrated weight value of 50% may be used as an average particle size.

The average particle size may also be measured by a laser diffraction/scattering method or a flow image analysis method.

Even when the second resin layer 120 is a layer containing a powder of the second cholesteric liquid crystal resin as a pigment, the second resin layer 120 may be formed by using a powder of the second cholesteric liquid crystal resin instead of the powder of the first cholesteric liquid crystal resin in the method of producing the first resin layer 110.

The powder of the second cholesteric liquid crystal resin may be produced by using the second liquid crystal composition instead of the first liquid crystal composition in the method for producing a powder of the first cholesteric liquid crystal resin.

[Optional layer]

The identification medium may include an optional layer other than the first resin layer and the second resin layer as long as the optional layer does not impair the object of the present invention. Examples of the optional layer may include a tackiness layer and a substrate layer. The tackiness layer may be provided, for example, between the first resin layer and the second resin layer or on a surface of the second resin layer opposite to the surface on the first resin layer side. The substrate layer may be provided on the surface of the second resin layer opposite to the surface on the first resin layer side. Specific examples of the identification medium including an optional layer may include identification mediums having the following configurations.

(First resin layer / tackiness layer / second resin layer)

(First resin layer / second resin layer / tackiness layer)

(First resin layer / tackiness layer / second resin layer/ tackiness layer)

(First resin layer / tackiness layer / second resin layer/ tackiness layer / substrate layer)

In the configuration examples of the identification mediums, it is shown that the layer on the left side is arranged so as to be closer to the viewing side.
The material of the substrate layer is not particularly limited, and examples thereof may include resin, metal, glass, and paper.
In the present embodiment, when the identification medium includes an optional layer closer to the viewing side than the first resin layer or the second resin layer is, the optional layer is preferably a layer having a high light transmittance, and more preferably a layer having a total light transmittance of 70% or higher, and preferably a layer having a small in-plane retardation Re (e.g., 5 nm or less).

[1.2. Second embodiment of identification medium]

An identification medium according to a second embodiment of the present invention includes a first resin layer including an absorbing layer and a reflecting layer and a second resin layer in this order from the viewing side.
FIG. 2 is a cross-sectional view schematically illustrating the identification medium according to the second embodiment of the present invention. An identification medium 200 is disposed on a surface of an article 30. The identification medium 200 includes an absorbing layer 211, a reflecting layer 212, and a second resin layer 220 in this order. Among these, the first resin layer 210 is constituted by the absorbing layer 211 and the reflecting layer 212. The identification medium 200 is configured such that the first resin layer 210 is placed on the viewing side and the second resin layer 220 is placed on the article 30 side. The identification medium 200 and the article 30 constitute an identification article 40.
The absorbing layer 211 has an average value of light transmittance at a wavelength of 400 nm or longer and 425 nm or shorter of usually 80% or more and 88% or less, preferably 84% or more, and 88% or less. By setting the average value of the light transmittance of the absorbing layer 211 at the wavelength of 400 nm or longer and 425 nm or shorter to fall within the aforementioned range, even if the average value of the light transmittance of the reflecting layer 212 at the wavelength of 400 nm or longer and 425 nm or shorter deviates from the range of 50% or more and 88% or less, the average value of the light transmittance of the entire first resin layer 210 in which the absorbing layer 211 and the reflecting layer 212 are combined can be set to a value in the range of 50% or more and 88% or less. This increases the degree of freedom in selecting the material of the first cholesteric liquid crystal resin contained in the reflecting layer 212. The average value of the light transmittance of the entire first resin layer 210 at the wavelength of 400 nm or longer and 425 nm or shorter is usually 50% or more and 88% or less.
The average value of the light transmittance of the absorbing layer 211 may be measured by the same method as the method for measuring the average value of the light transmittance of the first resin layer described in the first embodiment.
The absorbing layer 211 may be formed of, for example, a resin that absorbs light in a wavelength range of at least 400 nm or longer and 425 nm or shorter; a material containing a resin having high total light transmittance and a light absorber that absorbs light in a wavelength range of at least 400 nm or longer and 425 nm or shorter. As the light absorber, for example, a known ultraviolet absorber may be used.
The thickness of the absorbing layer 211 may be, for example, 1 μm or more and 50 μm or less.
The reflecting layer 212 includes a first cholesteric liquid crystal resin that selectively reflects light at a wavelength of 700 nm or longer and 900 nm or shorter. Specifically, the reflecting layer 212 is a layer of the first cholesteric liquid

crystal resin. Herein, the first cholesteric liquid crystal resin may be the same resin as the first cholesteric liquid crystal resin described in the first embodiment as above.

The thickness of the reflecting layer 212 may be, for example, 0.5 μm or more and 10 μm or less.

The reflecting layer 212 may be a thin film of the first cholesteric liquid crystal resin or a layer containing a powder of the first cholesteric liquid crystal resin as a pigment.

The reflecting layer 212 may be formed by the same method as that of the first resin layer 110 of the first embodiment.

The thickness of the first resin layer 210 may be, for example, 0.5 μm or more and 100 μm or less, and for example, 1.5 μm or more and 10 μm or less.

The second resin layer 220 may have the same configuration as that of the second resin layer 120 described in the first embodiment.

In the present embodiment, of the absorbing layer 211 and the reflecting layer 212 of the first resin layer 210, the absorbing layer 211 is placed on the viewing side and the reflecting layer 212 is placed on the second resin layer 220 side. However the identification medium of the present invention may be configured such that the reflecting layer is placed on the viewing side and the absorbing layer is placed on the second resin layer side.

[Optional layer]

The identification medium may include an optional layer other than the first resin layer (absorbing layer and reflecting layer) and the second resin layer. The identification medium may include the same optional layer as the optional layer described in the first embodiment in the same configuration.

[1.3. Third embodiment of the identification medium]

An identification medium according to a third embodiment of the present invention includes a second resin layer and a first resin layer in this order from the viewing side. The second resin layer includes an absorbing layer and a reflecting layer.

FIG. 3 is a cross-sectional view schematically illustrating an identification medium according to a third embodiment of the present invention. The identification medium 300 is disposed on the surface of an article 50.

The identification medium 300 includes an absorbing layer 321, a reflecting layer 322, and a first resin layer 310 in this order. Accordingly, the reflecting layer 322 is disposed between the absorbing layer 321 and the first resin layer 310. The absorbing layer 321 and the reflecting layer 322 constitute a second resin layer 320. The identification medium 300 is configured such that the second resin layer 320 is placed on the viewing side and the first resin layer 310 is placed on the article 50 side. The identification medium 300 and the article 50 constitute an identification article 60.

The absorbing layer 321 has an average value of light transmittance at a wavelength of 400 nm or longer and 425 nm or shorter of 80% or more and 88% or less, preferably 84% or more and 88% or less.

As a result, light at a wavelength of 400 nm or longer and 425 nm or shorter reaching the reflecting layer 322 of the second resin layer 320 can be reduced, and the viewing angle at which the reflected light from the identification medium 300 shifts from the short wavelength side to the long wavelength side can be decreased.

The average value of the light transmittance of the absorbing layer 321 may be measured by the same method as the method for measuring the average value of light transmittance of the first resin layer described in the first embodiment.

The absorbing layer 321 may be formed of, for example, a material capable of forming the absorbing layer 211 exemplified in the second embodiment.

The thickness of the absorbing layer 321 may be, for example, 1 μm or more and 50 μm or less.

The reflecting layer 322 includes a second cholesteric liquid crystal resin that selectively reflects light at a wavelength of 400 nm or longer and 500 nm or shorter. Specifically, the reflecting layer 322 is a layer of the second cholesteric liquid crystal resin. Herein, the second cholesteric liquid crystal resin may be the same resin as the second cholesteric liquid crystal resin described in the first embodiment as above.

The thickness of the reflecting layer 322 may be, for example, 0.5 μm or more and 10 μm or less.

The reflecting layer 322 may be a thin film of the second cholesteric liquid crystal resin or a layer containing a powder of the second cholesteric liquid crystal resin as a pigment.

The reflecting layer 322 may be formed by the same method as that of the second resin layer 120 of the first embodiment.

The thickness of the second resin layer 320 may be, for example, 0.5 μm or more and 100 μm or less, and for example, 1.5 μm or more and 10 μm or less.

The first resin layer 310 may have the same configuration as that of the first resin layer 110 described in the first embodiment.

The identification medium may include an optional layer other than the second resin layer (absorbing layer and reflecting layer) and the first resin layer. The identification medium may include the same optional layer as the optional layer described in the first embodiment. Specific examples of the identification medium including an optional layer may include identification mediums having the following configurations.

(Second resin layer / tackiness layer / first resin layer)

(Second resin layer / first resin layer / tackiness layer)

(Second resin layer / tackiness layer / first resin layer/ tackiness layer)

(Second resin layer / tackiness layer / first resin layer/ tackiness layer / substrate layer)

In the configuration example of the identification medium, it is shown that the layer on the left side is arranged so as to be closer to the viewing side.

[1.4. Fourth embodiment of identification medium]

An identification medium according to a fourth embodiment of the present invention includes an absorbing layer and a pigment layer in this order from the viewing side. The pigment layer includes a first pigment and a second pigment. The pigment layer is preferably a layer having a single layer structure in which both the first pigment and the second pigment are dispersed. The absorbing layer has an average value of the light transmittance at a wavelength of 400 nm or longer and 425 nm or shorter of 80% or more and 88% or less.

FIG. 4 is a cross-sectional view schematically illustrating the identification medium according to the fourth embodiment of the present invention. An identification medium 400 is disposed on a surface of an article 70. The identification medium 400 includes a pigment layer 430 and an absorbing layer 440, and is configured such that the absorbing layer 440 is placed on the viewing side and the pigment layer 430 is placed on the article 70 side. The identification medium 400 and the article 70 constitute an identification article 80.

The pigment layer 430 is a layer in which both the first pigment 410 and the second pigment 420 are dispersed. The identification medium 400 includes only one layer of the pigment layer 430. However, in another aspect, the identification medium may include a plurality of pigment layers. When the identification medium includes a plurality of pigment layers, an absorbing layer is placed closer to the viewing side than the plurality of pigment layers are.

The first pigment 410 includes the first cholesteric liquid crystal resin, and the second pigment 420 includes the second cholesteric liquid crystal resin. Examples of the first cholesteric liquid crystal resin contained in the first pigment 410 and preferable examples thereof, and examples of the second cholesteric liquid crystal resin contained in the second pigment 420 and preferable examples thereof are the same as those of the respective examples and preferable examples described in the first embodiment.

The first cholesteric liquid crystal resin contained in the first pigment 410 and the second cholesteric liquid crystal resin contained in the second pigment 420 are usually in the form of a powder.

The powder of the first cholesteric liquid crystal resin and the powder of the second cholesteric liquid crystal resin may be the same as the powder of the first cholesteric liquid crystal resin and the powder of the second cholesteric liquid crystal resin described in the first embodiment, respectively.

The powder of the first cholesteric liquid crystal resin and the powder of the second cholesteric liquid crystal resin may be produced in the same manner as the respective producing methods described in the first embodiment, respectively.

The first pigment 410 and the second pigment 420 may contain additives other than the first cholesteric liquid crystal resin and the second cholesteric liquid crystal resin, respectively. However, the first pigment 410 may be a pigment composed only of the powder of the first cholesteric liquid crystal resin. The second pigment 420 may be a pigment composed only of the powder of the second cholesteric liquid crystal resin.

In addition to the first pigment 410 and the second pigment 420, the pigment layer 430 may include an optional material such as a binder, and usually includes a binder. Examples of the binder may include those mentioned in the description of the item (Resin layer containing powder of cholesteric liquid crystal resin) in the first embodiment.

The pigment layer 430 may be produced, for example, by preparing a coating liquid containing the first pigment 410 and the second pigment 420, a binder, and, as necessary, a suitable dispersion medium, applying the coating liquid onto a substrate by an appropriate coating method, and drying and/or curing it as necessary.

The absorbing layer 440 has an average value of light transmittance at a wavelength of 400 nm or longer and 425 nm or shorter of 80% or more and 88% or less, preferably 84% or more and 88% or less. As a result, light at a wavelength of 400 nm or longer and 425 nm or shorter reaching the pigment layer 430 including the second pigment

420 can be reduced, and the viewing angle at which the reflected light from the identification medium 400 shifts from the short wavelength side to the long wavelength side can be decreased.

The average value of the light transmittance of the absorbing layer 440 may be measured by the same method as the method for measuring the average value of the light transmittance of the first resin layer described in the first embodiment.

The absorbing layer 440 may be formed of, for example, a material capable of forming the absorbing layer 211 exemplified in the second embodiment.

The thickness of the absorbing layer 440 may be, for example, 1 μm or more and 50 μm or less.

The thickness of the pigment layer 430 may be, for example, 0.5 μm or more and 100 μm or less.

The thickness of the identification medium 400 may be, for example, 1.5 μm or more and 100 μm or less.

In addition to the pigment layer 430, the identification medium may include an optional layer as long as the optional layer does not impair the object of the present invention. Examples of the optional layer may include a substrate layer and a tackiness layer.

[1.5. Use application of identification medium]

The identification medium is, for example, stuck or transferred on an article so that it is suitably used for identifying authenticity of the article. Examples of an article to be identified for its authenticity may include articles such as a cash voucher, a gift certificate, a ticket, a certificate, and a security card. The identification medium can also be used in a form such as a label or a sticker for identifying authenticity.

[2. Method for identifying authenticity of identification medium]

The method according to an embodiment of the present invention is a method for identifying authenticity of an identification medium including: irradiating an identification medium with natural light; and observing one or more selected from hue, lightness, and chroma of reflected light from the identification medium through a counterclockwise circular polarizing plate and a clockwise circular polarizing plate. More specifically, the method of the present embodiment includes:

irradiating an identification medium with natural light;
determining whether reflected light from the identification medium changes in color from the short wavelength side to the long wavelength side when observed while increasing a viewing angle from the vicinity of a front direction; and
observing the reflected light from the identification medium through a counterclockwise circular polarizing plate and a clockwise circular polarizing plate as to one or more selected from hue, lightness, and chroma thereof, to thereby determine whether there is a difference in one or more selected from the hue, lightness, and chroma between the observation through the counterclockwise circular polarizing plate and the observation through clockwise circular polarizing plate.

Hereinafter, the method according to an embodiment of the present invention will be described.

[Irradiation of natural light]

First, an identification medium is irradiated with natural light. Examples of the identification medium to be used may include the identification media according to the first embodiment to the fourth embodiment.

An example of the identification medium to be used is an identification medium including, from a viewing side: a first resin layer that contains a first cholesteric liquid crystal resin as a cured product of a first liquid crystal composition and that selectively reflects light at a wavelength of 700 nm or longer and 900 nm or shorter; and a second resin layer that contains a second cholesteric liquid crystal resin as a cured product of a second liquid crystal composition and that selectively reflects light at a wavelength of 400 nm or longer and 500 nm or shorter, in this order, in which the first resin layer has an average value of the light transmittance at a wavelength of 400 nm or longer and 425 nm or shorter of 80% or more and 88% or less.

Natural light means non-polarized light and may be either solar light or artificial light.

After the irradiation of natural light, the following [Observation 1 of reflected light] and [Observation 2 of reflected light] are performed. [Observation 1 of reflected light] may be followed by [Observation 2 of reflected light], [Observation 2 of reflected light] may be followed by [Observation 1 of reflected light], or [Observation 1 of reflected light] and [Observation 2 of reflected light] may be simultaneously performed.

[Observation 1 of reflected light]

Reflected light from the identification medium is observed while increasing the viewing angle from the vicinity of the front direction (preferably at a viewing angle of 5° from the front direction). Reflected light is usually observed without using a polarizing plate.

As a result of the observation, it is determined whether the color of the reflected light changes from the short wavelength side to the long wavelength side. When the color of the reflected light does not change from the short wavelength side (for example, the color in the blue region) to the long wavelength side (for example, the color in the red region) as a result, it can be determined that the identification medium is not authentic.

[Observation 2 of reflected light]

One or more selected from hue, lightness, and chroma of reflected light from the identification medium are observed through a counterclockwise circular polarizing plate and a clockwise circular polarizing plate.

Depending on the twisted directions of the first cholesteric liquid crystal resin and the second cholesteric liquid crystal resin, polarized light reflected by the identification medium is as follows.

(1) When the first cholesteric liquid crystal resin and the second cholesteric liquid crystal resin are the same in the twisted direction: the identification medium reflects only circular polarized light having the same direction as the twisted directions of the first cholesteric liquid crystal resin and the second cholesteric liquid crystal resin.

(2) When the first cholesteric liquid crystal resin and the second cholesteric liquid crystal resin differ in the twisted direction: the identification medium reflects one circular polarized light having the same direction as the twisted direction of the first cholesteric liquid crystal resin and reflects the other circular polarized light having the same direction as the twisted direction of the second cholesteric liquid crystal resin.

In the case of (1), when the identification medium is observed through a counterclockwise circular polarizing plate and a clockwise circular polarizing plate, light reflected by the first cholesteric liquid crystal resin and the second cholesteric liquid crystal resin, which contains only one circular polarized light, is visually recognized through the aforementioned one circular polarizing plate which transmits one circular polarized light and is not visually recognized or less likely to be visually recognized through the other circular polarizing plate.

Therefore, reflected light from the identification medium is observed through counterclockwise and clockwise circular polarizing plates. When the reflected light from the identification medium through counterclockwise circular polarizing plate and the reflected light from the identification medium through clockwise circular polarizing plate have a difference in one or more selected from hue, lightness, and chroma, it can be determined that the identification medium is authentic.

When the reflected light from the identification medium through counterclockwise circular polarizing plate and the reflected light from the identification medium through clockwise circular polarizing plate have no difference in hue, lightness, and chroma, the identification medium does not have a selective reflection function to selectively reflect circular polarized light, and it can be determined that the identification medium is not authentic.

In the case of (2), when the identification medium is observed through a counterclockwise circular polarizing plate and a clockwise circular polarizing plate, one circular polarizing plate transmits light reflected by the first cholesteric liquid crystal resin and does not transmit light reflected by the second cholesteric liquid crystal resin.

Therefore, when the identification medium is observed in the vicinity of the front direction through this one circular polarizing plate, reflected light from the first cholesteric liquid crystal resin in which the infrared region and the selective reflection band overlap is usually not visually recognized or less likely to be visually recognized by a human. Also, light reflected by the second cholesteric liquid crystal resin does not pass through this one circular polarizing plate. Therefore, reflected light from the identification medium is not visually recognized or less likely to be visually recognized. When the identification medium is observed through this one circular polarizing plate while increasing the viewing angle $\Theta$, the center wavelength of reflected light from the first cholesteric liquid crystal resin shifts to the short wavelength side and becomes the center wavelength within a range that can be visually recognized by a human. Accordingly, reflected light having a center wavelength (for example, reflected light in the red region) corresponding to the viewing angle $\theta$ is visually recognized as reflected light from the identification medium.

Also, the other circular polarizing plate does not transmit light reflected by the first cholesteric liquid crystal resin and transmits light reflected by the second cholesteric liquid crystal resin.

Therefore, when the identification medium is observed in the vicinity of the front direction through the other circular polarizing plate, light reflected by the first cholesteric liquid crystal resin does not pass through the other circular polarizing plate, and light reflected by the second cholesteric liquid crystal resin (for example, reflected light in the blue region) is visually recognized as reflected light from the identification medium. When the identification medium is observed

through the other circular polarizing plate while increasing the viewing angle θ, the center wavelength of reflected light from the second cholesteric liquid crystal resin shifts to the short wavelength side and becomes the center wavelength within a range that is not visually recognized or is less likely to be visually recognized by a human. Accordingly, reflected light from the identification medium is not visually recognized or less likely to be visually recognized.

Therefore, the reflected light from the identification medium is observed through counterclockwise and clockwise circular polarizing plates while increasing the viewing angle θ from the vicinity of the front direction. When the reflected light from the identification medium through counterclockwise circular polarizing plate and the reflected light from the identification medium through clockwise circular polarizing plate have a difference in one or more selected from hue, lightness, and chroma, it can be determined that the identification medium is authentic.

When the reflected light from the identification medium through counterclockwise circular polarizing plate and the reflected light from the identification medium through clockwise circular polarizing plate have no difference in hue, lightness, and chroma, the identification medium does not have a selective reflection function to selectively reflect circular polarized light, and it can be determined that the identification medium is not authentic.

A difference in hue, lightness, and chroma of reflected light may be visually confirmed or may be quantitatively evaluated using a color difference meter. A color system used in the quantitative evaluation can be optional. Examples thereof may include the XYZ color system and the L*a*b* color system.

It can be determined that the identification medium is authentic, when the color of reflected light changes from the short wavelength side (for example, the color in the blue region) to the long wavelength side (for example, the color in the red region) in [Observation 1 of reflected light], and reflected light from the identification medium through counterclockwise circular polarizing plate and reflected light from the identification medium through clockwise circular polarizing plate have a difference in hue, lightness, and chroma in [Observation 2 of reflected light].

Examples

Hereinafter, the present invention will be specifically described by illustrating examples. However, the present invention is not limited to the following examples, and may be freely modified for implementation without departing from the scope of claims of the present invention.

In the following description, "%" and "part" representing quantity are on the basis of weight, unless otherwise specified. The operations described below were performed under the conditions of normal temperature and normal pressure in the air, unless otherwise specified.

[Evaluation method]

(Film thickness)

The thickness of the liquid crystal resin layer (a layer of the cholesteric liquid crystal resin, a layer of the homogeneous liquid crystal resin) in the obtained transferred body was measured by an optical interference film thickness meter ("F20" manufactured by Filmetrics).

(Method for measuring birefringence Δn)

The birefringence Δn of the liquid crystal composition was measured as follows.

A layer was formed with a coating liquid for forming a layer of a cholesteric liquid crystal resin from which a chiral agent had been removed. A liquid crystal compound contained in the coating liquid was homogenously oriented. The resultant product was cured with its orientation maintained to form a layer (a layer of a homogenous liquid crystal resin). An in-plane retardation Re and a layer thickness d of the formed layer were measured, and the Δn of the layer was calculated. The Δn of the layer was defined as the Δn of the liquid crystal composition.

In the following reference examples, the measurement method will be described further in detail.

(Center wavelength of selective reflection band)

The center wavelength of the selective reflection band of the cholesteric liquid crystal resin was measured according to the following method.

(Production Examples 1 to 5)

The liquid crystal resin layer (the layer of the cholesteric liquid crystal resin) in each of the transferred bodies obtained in the following Production Examples 1 to 5 was bonded to a black polyethylene terephthalate (PET) film with

a tackiness layer (manufactured by Tomoegawa Co.) through the tackiness layer. Thereafter, the support body was removed, and thus the liquid crystal resin layer was transferred onto the black PET film.

Next, a reflection spectrum of the liquid crystal resin layer at an incident angle of 5° was measured by a spectrophotometer ("V570" manufactured by Jasco Corporation). In the obtained reflection spectrum, a peak having a maximum strength was determined. An average value (($\lambda$1 + $\lambda$2)/2) of a wavelength $\lambda$1 on the short wavelength side of a peak and a wavelength $\lambda$2 on the long wavelength side, exhibiting a strength that is 50% of the maximum strength, was defined as the center wavelength of the selective reflection band of the cholesteric liquid crystal resin which forms the liquid crystal resin layer.

(First pigment and second pigment)

A pigment P1 or a pigment P2 produced in the following Example 6 and an ultraviolet curable binder ("Raycure OP 4300-2 series": manufactured by Jujo Chemical Co.) were mixed to obtain an ink having a solid content ratio of 10% by weight. The ink was used to perform screen printing onto a black paper sheet. The lines per inch of a screen-printing plate was 120.

The ink printed on the black paper sheet was irradiated with ultraviolet light by a high pressure mercury lamp under the following conditions to cure the ink.

· under a nitrogen atmosphere with an oxygen gas concentration of 400 ppm or less
· 280 mW/cm$^2$ in illuminance at a wavelength of 365 nm
· 400 mJ/cm$^2$ in exposure at a wavelength of 365 nm

Next, a reflection spectrum of the cured ink at an incident angle of 5° was measured by a spectrophotometer ("V570" manufactured by Jasco Corporation). In the obtained reflection spectrum, a peak having a maximum strength was determined. An average value (($\lambda$1 + $\lambda$2)/2) of a wavelength $\lambda$1 on the short wavelength side of a peak and a wavelength $\lambda$2 on the long wavelength side, exhibiting a strength that is 50% of the maximum strength, was defined as the center wavelength of the selective reflection band of the cholesteric liquid crystal resin which constitutes the pigment.

(Average value of light transmittance at wavelength of 400 nm or longer and 425 nm or shorter)

For the resin layer to be evaluated, an average value of the light transmittance at a wavelength of 400 nm or longer and 425 nm or shorter was measured according to the following method.

The liquid crystal resin layer in the transferred body obtained in each of the following Production Examples was bonded to a cycloolefin resin film ("ZF16-100" manufactured by Zeon Corporation) through a tackiness agent ("CS9621T" manufactured by Nitto Denko Corporation). Thereafter, the support body was removed, and thus the liquid crystal resin layer was transferred onto the cycloolefin resin film. Thus, a measurement sample was prepared.

When a resin layer includes an absorbing layer, a measurement sample was prepared by transferring the liquid crystal resin layer onto a cycloolefin resin film and thereafter further bonding an absorbing layer (resin layer A1) onto the liquid crystal resin layer through a tackiness agent ("CS9621T" manufactured by Nitto Denko Corporation).

For the resin layer to be evaluated, a transmittance $T_\lambda$ (%) of light at a wavelength from 400 nm to 425 nm in a thickness direction was measured every 1 nm by a spectrophotometer ("V570" manufactured by Jasco Corporation). In the measurement, a transmittance (%) of a cycloolefin resin film was measured to be used as a base line. An arithmetic mean value $T_{AVE}$ of the transmittance $T_\lambda$ was calculated according to the following formula to obtain an average value of the light transmittance at a wavelength of 400 nm or longer and 425 nm or shorter for a resin layer to be evaluated.

[Mathematical Formula 3]

$$T_{AVE} = \frac{\sum_{\lambda=400}^{425} T_\lambda}{26}$$

(Viewing angle $\theta$ when shifting to red region)

The surface on the resin layer side of each of the layered bodies obtained in Examples and Comparative Examples was irradiated with natural light from a front direction. Reflected light from the layered body was visually observed in a range of viewing angle $\theta$ = 5° to viewing angle $\theta$ = 70° from a front direction. A viewing angle when the reflected light changes from the blue region to the red region was measured. The viewing angle when reflected light

changes from the blue region to the red region is preferably as small as possible.

(Method for evaluating chroma of reflected light in vicinity of front direction (viewing angle θ = 5°))

For the layered body to be evaluated, a reflection spectrum at an incident angle of 5° from a resin layer side was measured by a spectrophotometer ("V570" manufactured by Jasco Corporation). The obtained reflection spectrum was used to calculate chroma according to the following method.

(STEP. 1)

With the measured reflection spectrum R(λ) and the following (formula. 1) to (formula. 3), tristimulus values X, Y, and Z were calculated.

[Mathematical Formula 4]

$$X=\Sigma_{n=0}^{80} S(380+5n)*R(380+5n)*x(380+5n) \quad \text{(formula. 1)}$$

$$Y=\Sigma_{n=0}^{80} S(380+5n)*R(380+5n)*y(380+5n) \quad \text{(formula. 2)}$$

$$Z=\Sigma_{n=0}^{80} S(380+5n)*R(380+5n)*z(380+5n) \quad \text{(formula. 3)}$$

Herein, S(λ) is a spectrum of a light source. In the present example, the value of a C light source was used. Also, x(λ), y(λ), and z(λ) represent color-matching functions.

(STEP. 2)

With the tristimulus values X, Y, and Z calculated in STEP. 1, lightness L*, a*, and b* of the CIE 1976 L*a*b* color space were calculated. For the calculation, the following (formula. 4) to (formula. 6) were utilized.

[Mathematical Formula 5]

$$L^*=116\left(\frac{X}{X_n}\right)^{1/3}-16 \quad \text{(formula. 4)}$$

$$a^*=500\left\{f\left(\frac{X}{X_n}\right)-f\left(\frac{Y}{Y_n}\right)\right\} \quad \text{(formula. 5)}$$

$$b^*=200\left\{f\left(\frac{Y}{Y_n}\right)-f\left(\frac{Z}{Z_n}\right)\right\} \quad \text{(formula. 6)}$$

Herein, $X_n$, $Y_n$, and $Z_n$ are tristimulus values calculated according to (formula. 7) to (formula. 9) respectively.

[Mathematical Formula 6]

$$X_n = \Sigma_{n=0}^{80} S(380+5n) * x(380+5n) \quad \text{(formula. 7)}$$

$$Y_n = \Sigma_{n=0}^{80} S(380+5n) * y(380+5n) \quad \text{(formula. 8)}$$

$$Z_n = \Sigma_{n=0}^{80} S(380+5n) * z(380+5n) \quad \text{(formula. 9)}$$

Also, $f(X/X_n)$, $f(Y/Y_n)$, and $f(Z/Z_n)$ are represented by (formula. 10) to (formula. 12) respectively.

[Mathematical Formula 7]

$$f\left(\frac{X}{X_n}\right) = \left(\frac{X}{X_n}\right)^{1/3} \qquad \frac{X}{X_n} > 0.008856$$

$$f\left(\frac{X}{X_n}\right) = 7.787\left(\frac{X}{X_n}\right) + \frac{16}{116} \qquad \frac{X}{X_n} \leqq 0.008856 \quad \text{(formula. 10)}$$

$$f\left(\frac{Y}{Y_n}\right) = \left(\frac{Y}{Y_n}\right)^{1/3} \qquad \frac{Y}{Y_n} > 0.008856$$

$$f\left(\frac{Y}{Y_n}\right) = 7.787\left(\frac{Y}{Y_n}\right) + \frac{16}{116} \qquad \frac{Y}{Y_n} \leqq 0.008856 \quad \text{(formula. 11)}$$

$$f\left(\frac{Z}{Z_n}\right) = \left(\frac{Z}{Z_n}\right)^{1/3} \qquad \frac{Z}{Z_n} > 0.008856$$

$$f\left(\frac{Z}{Z_n}\right) = 7.787\left(\frac{Z}{Z_n}\right) + \frac{16}{116} \qquad \frac{Z}{Z_n} \leqq 0.008856 \quad \text{(formula. 12)}$$

Furthermore, chroma C* was calculated from the obtained values of a* and b* according to (formula. 13).
[Mathematical Formula 8]

$$C^* = \sqrt{(a^*)^2 + (b^*)^2} \quad \text{(formula. 13)}$$

The chroma C* is preferably as large as possible.

(Method for evaluating chroma of reflected light in oblique direction (viewing angle θ = 60°))

For the layered body to be evaluated, a reflection spectrum at an incident angle of 60° from the resin layer side was measured by a spectrophotometer ("V7200" manufactured by Jasco Corporation). The obtained reflection spectrum was used to calculate chroma C* according to the aforementioned (formula. 1) to (formula. 13) .

[Production Example 1]

As a support body, a polyethylene terephthalate (PET) film ("Cosmoshine (registered trademark) A4100" manufactured by Toyobo Co., thickness 100 μm) was prepared. One surface of the film was subjected to a rubbing treatment.
Materials shown in the following table were mixed to prepare a coating liquid L1 containing a liquid crystal composition and a solvent. In the following description, a compound (1) and a compound (2) are compounds represented by the following formulae, respectively.

[Chemical formula 3]

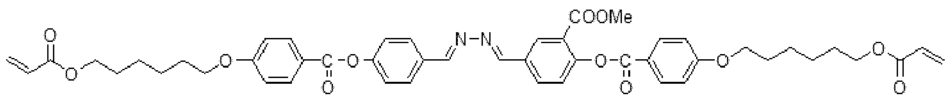

compound (1)

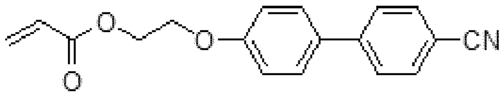

compound (2)

[Table 1]

| Table 1 Coating Liquid L1 | | |
|---|---|---|
| liquid crystal composition | | |
| liquid crystal compound | compound (1) | 16.29 parts by weight |
| orientation auxiliary agent | compound (2) | 4.07 parts by weight |
| chiral agent | "LC756" manufactured by BASF Co. | 0.95 part by weight |
| polymerization initiator | "IRGACURE184" manufactured by BASF Co. | 0.66 part by weight |
| leveling agent | " Surflon S420" manufactured by AGC Seimi Chemical Co. | 0.04 part by weight |
| solvent | cyclopentanone | 77.99 parts by weight |

(Coating process)

Next, the coating liquid L1 was applied onto the rubbing-treated surface of the support body using a #8 wire bar to perform a coating process of forming a coating layer containing the liquid crystal composition.

(Drying process)

Next, a drying process was performed by heating the coating layer formed on the PET film in an oven at 140°C for 2 minutes. By this heating, the solvent was removed, and the orientation of the liquid crystal compound was promoted. Thus, a layer of the liquid crystal composition having cholesteric regularity (liquid crystal composition layer) was formed.

(Curing process)

Next, a curing process was performed by irradiating the liquid crystal composition side of the support body, on which the liquid crystal composition layer was formed, with ultraviolet light using a high pressure mercury lamp to cure the liquid crystal composition layer and form a layer constituted by a cured product of the liquid crystal composition. The conditions of the ultraviolet irradiation were under a nitrogen gas atmosphere with an oxygen concentration of 400 ppm or less, 280 $mW/cm^2$ in illuminance at a wavelength of 365 nm, and 2300 $mJ/cm^2$ in accumulated light quantity at a

wavelength of 365 nm.

When the liquid crystal composition layer having cholesteric regularity was cured, the cholesteric liquid crystal composition was cured while maintaining cholesteric regularity. Accordingly, a layer of the cholesteric liquid crystal resin was formed as a layer of the resin having cholesteric regularity. The thickness of the layer of the cholesteric liquid crystal resin was 3 μm.

According to this curing process, a transferred body 1 having a structure of (support body) / (cholesteric liquid crystal resin layer) was obtained.

[Reference Example 1']

(Measurement of Δn)

The Δn of the liquid crystal composition according to Production Example 1 was measured by the following method.

A coating liquid L'1 was prepared by mixing materials in the same formulation as that of the coating liquid L1 of Production Example 1 except that the amount of a chiral agent was 0 part by weight. A transferred body 1' was obtained by the same manner as that of Production Example 1 except that the coating liquid L'1 was used instead of the coating liquid L1. In the transferred body 1', a layer of a homogeneous liquid crystal resin, in which the liquid crystal compound is cured with its homogeneous orientation maintained, is formed on the surface of the support body. The thickness of the layer of the homogeneous liquid crystal resin of the transferred body 1' was measured and found to be 3 μm.

The layer of the homogeneous liquid crystal resin of the obtained transferred body 1' and a glass plate were bonded together through a tackiness agent ("CS9621T" manufactured by Nitto Denko Corporation). Thereafter, the support body of the transferred body 1' was removed, and thus the layer of the homogeneous liquid crystal resin was transferred onto the glass plate. Accordingly, a sample for measuring a phase difference was obtained. An in-plane retardation Re at a wavelength of 590 nm of the sample for measuring a phase difference was measured by a phase difference meter ("Axoscan" manufactured by Axometrics Co.).

From the measured in-plane retardation Re and the thickness of the layer of the homogeneous liquid crystal resin, Δn was calculated. The obtained Δn was defined as the Δn of the liquid crystal composition according to Production Example 1.

[Production Example 2]

A transferred body 2 was obtained by the same manner as that of Production Example 1 except that a coating liquid L2 obtained by mixing the materials shown in the following table was used instead of the coating liquid L1. The thickness of the layer of the cholesteric liquid crystal resin included in the transferred body 2 was 3 μm.

[Table 2]

| Table 2 Coating Liquid L2 | | |
|---|---|---|
| liquid crystal composition | | |
| liquid crystal compound | compound (1) | 15.80 parts by weight |
| orientation auxiliary agent | compound (2) | 3.95 parts by weight |
| chiral agent | "LC756" manufactured by BASF Co. | 1.56 parts by weight |
| polymerization initiator | "IRGACURE 184" manufactured by BASF Co. | 0.66 part by weight |
| leveling agent | "Surflon S420" manufactured by AGC Seimi Chemical Co. | 0.04 part by weight |
| solvent | cyclopentanone | 77.99 parts by weight |

[Reference Example 2']

(Measurement of Δn)

The Δn of the liquid crystal composition according to Production Example 2 was measured by the following method.

A coating liquid L'2 was prepared by mixing the materials in the same formulation as that of the coating liquid

L2 of Production Example 2 except that the amount of the chiral agent was 0 part by weight. A transferred body 2' was obtained by the same manner as that of Production Example 2 except that the coating liquid L'2 was used instead of the coating liquid L2. In the transferred body 2', a layer of a homogeneous liquid crystal resin, in which the liquid crystal compound is cured with its homogeneous orientation maintained, is formed on the surface of the support body. The thickness of the layer of the homogeneous liquid crystal resin of the transferred body 2' was measured and found to be 3 μm.

A sample for measuring a phase difference was obtained by the same manner as that of Reference Example 1' using the transferred body 2' instead of the transferred body 1'. Then, the in-plane retardation Re was measured and Δn was calculated. The obtained Δn was defined as the Δn of the liquid crystal composition according to Production Example 2.

[Production Example 3]

A transferred body 3 was obtained by the same manner as that of Production Example 1 except that the following items were changed. A coating liquid L3 obtained by mixing the materials shown in the following table was used instead of the coating liquid L1. The drying temperature in the drying process was changed from 140°C to 90°C.

The thickness of the layer of the cholesteric liquid crystal resin included in the transferred body 3 was 3 μm.

[Table 3]

| Table 3 Coating Liquid L3 | | |
|---|---|---|
| liquid crystal composition | | |
| liquid crystal compound | "LC242" manufactured by BASF Co. | 20.59 parts by weight |
| chiral agent | "LC756" manufactured by BASF Co. | 0.72 part by weight |
| polymerization initiator | "IRGACURE184" manufactured by BASF Co. | 0.66 part by weight |
| leveling agent | " Surflon S420" manufactured by AGC Seimi Chemical Co. | 0.04 part by weight |
| solvent | cyclopentanone | 77.99 parts by weight |

[Reference Example 3']

(Measurement of Δn)

The Δn of the liquid crystal composition according to Production Example 3 was measured by the following method.

A coating liquid L'3 was prepared by mixing the materials in the same formulation as that of the coating liquid L3 of Production Example 3 except that the amount of the chiral agent was 0 part by weight. A transferred body 3' was obtained by the same manner as that of Production Example 3 except that the coating liquid L'3 was used instead of the coating liquid L3. In the transferred body 3', a layer of a homogeneous liquid crystal resin, in which the liquid crystal compound is cured with its homogeneous orientation maintained, is formed on the surface of the support body. The thickness of the layer of the homogeneous liquid crystal resin of the transferred body 3' was measured and found to be 3 μm.

A sample for measuring a phase difference was obtained by the same manner as that of Reference Example 1' using the transferred body 3' instead of the transferred body 1'. Then, the in-plane retardation Re was measured and Δn was calculated. The obtained Δn was defined as the Δn of the liquid crystal composition according to Production Example 3.

[Production Example 4]

A transferred body 4 was obtained by the same manner as that of Production Example 1 except that the following items were changed. A coating liquid L4 obtained by mixing the materials shown in the following table was used instead of the coating liquid L1. The drying temperature in the drying process was changed from 140°C to 90°C.

The thickness of the layer of the cholesteric liquid crystal resin included in the transferred body 4 was 3 μm.

[Table 4]

| Table 4 Coating Liquid L4 | | |
|---|---|---|
| liquid crystal composition | | |
| liquid crystal compound | "LC242" manufactured by BASF Co. | 20.16 parts by weight |
| chiral agent | "LC756" manufactured by BASF Co. | 1.16 parts by weight |
| polymerization initiator | "IRGACURE184" manufactured by BASF Co. | 0.66 part by weight |
| leveling agent | " Surflon S420" manufactured by AGC Seimi Chemical Co. | 0.04 part by weight |
| solvent | cyclopentanone | 77.98 parts by weight |

[Reference Example 4']

(Measurement of Δn)

The Δn of the liquid crystal composition according to Production Example 4 was measured by the following method.

A coating liquid L'4 was prepared by mixing the materials in the same formulation as that of the coating liquid L4 of Production Example 4 except that the amount of the chiral agent was 0 part by weight. A transferred body 4' was obtained by the same manner as that of Production Example 4 except that the coating liquid L'4 was used instead of the coating liquid L4. In the transferred body 4', a layer of a homogeneous liquid crystal resin, in which the liquid crystal compound is cured with its homogeneous orientation maintained, is formed on the surface of the support body. The thickness of the layer of the homogeneous liquid crystal resin of the transferred body 4' was measured and found to be 3 μm.

A sample for measuring a phase difference was obtained by the same manner as that of Reference Example 1' using the transferred body 4' instead of the transferred body 1'. Then, the in-plane retardation Re was measured and Δn was calculated. The obtained Δn was defined as the Δn of the liquid crystal composition according to Production Example 4.

The layer of the cholesteric liquid crystal resin constituting each of the transferred bodies 1 to 4 produced in the aforementioned Production Examples 1 to 4 is a layer produced from a liquid crystal composition containing the same chiral agent ("LC756" manufactured by BASF Co.). The cholesteric liquid crystal resin contained in each of the layers has the same twisted direction of cholesteric regularity. The fact that the cholesteric liquid crystal resin contained in each of the layers had the same twisted direction of cholesteric regularity was also confirmed by visually observing reflected light from each of the layers of the cholesteric liquid crystal resins constituting the transferred bodies 1 to 4 through counterclockwise and clockwise circular polarizing plates to find that the types of the circular polarizing plates through which reflected light was visually recognized were the same and that the types of the circular polarizing plates through which reflected light was hardly visually recognized were the same. Circular polarized light reflected by the layers of the cholesteric liquid crystal resin constituting the transferred bodies 1 to 4 was clockwise circular polarized light.

[Production Example 5]

A transferred body 5 was obtained by the same manner as that of Production Example 1 except that a coating liquid L5 obtained by mixing the materials shown in the following table was used instead of the coating liquid L1. The thickness of the layer of the cholesteric liquid crystal resin contained in the transferred body 5 was 3 μm.

In the following description, the compound (3) is a compound represented by the following formula.

[Chemical formula 4]

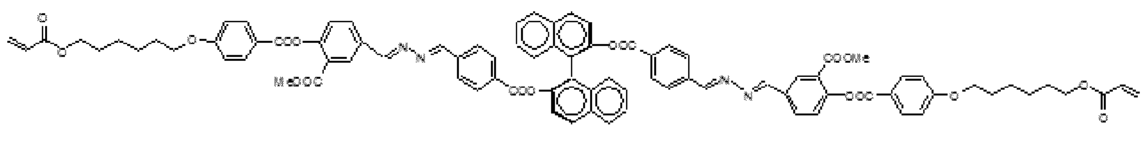

compound (3)

[Table 5]

| Table 5 Coating Liquid L5 | | |
|---|---|---|
| liquid crystal composition | | |
| liquid crystal compound | compound (1) | 16.22 parts by weight |
| orientation auxiliary agent | compound (2) | 4.05 parts by weight |
| chiral agent | compound (3) | 1.05 parts by weight |
| polymerization initiator | "IRGACURE184" manufactured by BASF Co. | 0.66 part by weight |
| leveling agent | "Surflon S420" manufactured by AGC Seimi Chemical Co. | 0.04 part by weight |
| solvent | cyclopentanone | 77.98 parts by weight |

[Reference Example 5']

(Measurement of Δn)

The Δn of the liquid crystal composition according to Production Example 5 was measured by the following method.

A coating liquid L'5 was prepared by mixing the materials in the same formulation as that of the coating liquid L5 of Production Example 5 except that the amount of the chiral agent was 0 part by weight. A transferred body 5' was obtained by the same manner as that of Production Example 5 except that the coating liquid L'5 was used instead of the coating liquid L5. In the transferred body 5', a layer of a homogeneous liquid crystal resin, in which the liquid crystal compound is cured with its homogeneous orientation maintained, is formed on the surface of the support body. The thickness of the layer of the homogeneous liquid crystal resin of the transferred body 5' was measured and found to be 3 μm.

A sample for measuring a phase difference was obtained by the same manner as that of Reference Example 1' using the transferred body 5' instead of the transferred body 1'. Then, the in-plane retardation Re was measured and Δn was calculated. The obtained Δn was defined as the Δn of the liquid crystal composition according to Production Example 5.

The cholesteric liquid crystal resin constituting the transferred body 5 and the cholesteric liquid crystal resins constituting the transferred bodies 1 to 4 differ in cholesteric regularity. The fact that the cholesteric resin constituting the transferred body 5 and the cholesteric liquid crystal resins constituting the transferred bodies 1 to 4 differed in the twisted direction of cholesteric regularity was confirmed by visually observing reflected light from the layer of the cholesteric liquid crystal resin constituting each of the transferred body 5 and the transferred bodies 1 to 4 through counterclockwise and clockwise circular polarizing plates to find that the type of the circular polarizing plate through which reflected light was visually recognized differed between the transferred body 5 and the transferred bodies 1 to 4 and that the type of the circular polarizing plate through which reflected light was hardly visually recognized differed between the transferred body 5 and the transferred bodies 1 to 4. Circular polarized light reflected by the layer of the cholesteric liquid crystal resin constituting the transferred body 5 was counterclockwise circular polarized light.

[Production Example A1]

The materials shown in the following table were mixed to obtain a coating liquid AL1.

[Table 6]

| Table 6 Coating Liquid AL1 | | |
|---|---|---|
| composition | | |
| liquid crystal compound | compound (1) | 16.45 parts by weight |
| orientation auxiliary agent | compound (2) | 4.11 parts by weight |
| polymerization initiator | "IRGACURE184" manufactured by BASF Co. | 0.67 part by weight |
| leveling agent | "Surflon S420" manufactured by AGC Seimi Chemical Co. | 0.04 part by weight |

(continued)

| Table 6 Coating Liquid AL1 | | |
|---|---|---|
| solvent | cyclopentanone | 78.74 parts by weight |

As a support body, a glass plate was prepared. The coating liquid AL1 was applied onto a surface of the glass plate using a #8 wire bar to form a coating layer.

Next, the coating layer formed on the glass plate was heated in an oven at 230°C for 1 hour. The heating was performed under the environment of an oxygen gas concentration of 1% or less by filling the oven with nitrogen gas. Through this heating, the solvent in the coating layer was removed, and the coating layer was cured in a state in which orientation relaxation was promoted. Accordingly, a resin layer A1 was formed. Thus, a transferred body A1 having a structure of (support body) / (resin layer A1) was obtained. The thickness of the resin layer A1 was 3 μm.

[Example 1]

(Lamination of second resin layer)

The layer of the cholesteric liquid crystal resin included in the transferred body 2 obtained in Production Example 2 was bonded to a black PET film with a tackiness layer (manufactured by Tomoegawa Co.) through the tackiness layer. Thereafter, the support body was removed, and thus the layer of the cholesteric liquid crystal resin as the second resin layer was transferred onto the black PET film assumed as an article to which the identification medium was to be stuck.

(Lamination of first resin layer)

The layer of the cholesteric liquid crystal resin included in the transferred body 1 obtained in Production Example 1 was bonded to the second resin layer through a tackiness agent ("CS9621T" manufactured by Nitto Denko Corporation). Thereafter, the support body was removed, and thus the layer of the cholesteric liquid crystal resin was laminated onto the second resin layer. Thus, a layered body having a layer structure of (layer of first cholesteric liquid crystal resin) / (tackiness layer) / (second resin layer containing second cholesteric liquid crystal resin) / (tackiness layer) / (black PET film) was obtained. In this layered body, the layer of the first cholesteric liquid crystal resin corresponds to the first resin layer.

[Example 2]

An intermediate layered body having a layer structure of (layer of first cholesteric liquid crystal resin) / (tackiness layer) / (second resin layer containing second cholesteric liquid crystal resin) / (tackiness layer) / (black PET film) was obtained by the same manner as that of Example 1 except that the transferred body 3 obtained in Production Example 3 was used instead of the transferred body 1 in the lamination of the first resin layer. Next, the resin layer A1 included in the transferred body A1 obtained in Production Example A1 was bonded to the layer of the first cholesteric liquid crystal resin included in the intermediate layered body through a tackiness agent ("CS9621T" manufactured by Nitto Denko Corporation). Thereafter, the glass plate as the support body was removed, and thus the resin layer A1 was laminated onto the layer of the first cholesteric liquid crystal resin. Thus, a layered body having a layer structure of (resin layer A1) / (tackiness layer) / (layer of first cholesteric liquid crystal resin) / (tackiness layer) / (second resin layer containing second cholesteric liquid crystal resin) / (tackiness layer) / (black PET film) was obtained. In this layered body, the resin layer A1 corresponds to the absorbing layer, and the layer of the first cholesteric liquid crystal resin corresponds to the reflecting layer.

[Example 3]

A layered body was obtained by the same manner as that of Example 1 except that the transferred body 4 obtained in Production Example 4 was used in layering the second resin layer instead of the transferred body 2.

[Example 4]

A layered body was obtained by the same manner as that of Example 1 except that the transferred body 5 obtained in Production Example 5 was used in layering the first resin layer instead of the transferred body 1.

[Comparative Example 1]

A layered body was obtained by the same manner as that of Example 1 except that the transferred body 4 obtained in Production Example 4 was used in layering the second resin layer instead of the transferred body 2 and the transferred body 3 obtained in Production Example 3 was used in layering the first resin layer instead of the transferred body 1.

[Comparative Example 2]

A layered body was obtained by the same manner as that of Example 1 except that the transferred body 1 obtained in Production Example 1 was used in layering the second resin layer instead of the transferred body 2 and the transferred body 2 obtained in Production Example 2 was used in layering the first resin layer instead of the transferred body 1.

[Results of Examples 1 to 4 and Comparative Examples 1 to 2]

The layer structures and evaluation results of Examples 1 to 4 are shown in Table 7, and the layer structures and evaluation results of Comparative Examples 1 and 2 are shown in Table 8.

In the following table, "Layer on viewing side" means a layer closer to the viewing side than the layer containing the second cholesteric liquid crystal resin.

In Comparative Example 2, the average value of the light transmittance of the second reflecting layer at a wavelength of 400 nm or longer and 425 nm or shorter was 85%.

[Table 7]

Table 7

| | | Example 1 | Example 2 | Example 3 | Example 4 |
|---|---|---|---|---|---|
| layer structure | | first resin layer / second resin layer | first resin layer / second resin layer | first resin layer / second resin layer | first resin layer / second resin layer |
| first resin layer | | | | | |
| | first absorbing layer | non | A1 | non | non |
| | average value of transmittance at 400-425nm | - | 88% | - | - |
| | first reflecting layer | | | | |
| | coating liquid | L1 | L3 | L1 | L5 |
| | birefringence $\Delta n1$ | 0.23 | 0.12 | 0.23 | 0.23 |
| | center wavelength of selective reflection band | 725nm | 725nm | 725nm | 725nm |
| | circular polarized light to be reflected | clockwise | clockwise | clockwise | counterclockwise |
| | average value of transmittance at 400-425nm | 85% | 95% | 85% | 85% |
| average value of transmittance at 400-425nm of entire first resin layer | | 85% | 84% | 85% | 85% |
| second resin layer | | | | | |

(continued)

| | Example 1 | Example 2 | Example 3 | Example 4 |
|---|---|---|---|---|
| layer structure | first resin layer / second resin layer | first resin layer / second resin layer | first resin layer / second resin layer | first resin layer / second resin layer |
| second absorbing layer | non | non | non | non |
| average value of transmittance at 400-425nm | | | | |
| second reflecting layer | | | | |
| coating liquid | L2 | L2 | L4 | L2 |
| birefringence Δn2 | 0.23 | 0.23 | 0.12 | 0.23 |
| center wavelength of selective reflection band | 450nm | 450nm | 450nm | 450nm |
| circular polarized light to be reflected | clockwise | clockwise | clockwise | clockwise |
| layer on viewing side | first resin layer | first resin layer | first resin layer | first resin layer |
| average value of transmittance at 400-425nm of entirety of layer on viewing side | 85% | 84% | 85% | 85% |
| chroma C*(θ=5°) of blue | 40 | 42 | 50 | 40 |
| chroma C*(θ=60°) of red | 11 | 14 | 11 | 11 |
| θ(°) at which a shift to red region occurs | 35 | 30 | 35 | 35 |

[Table 8]

Table 8

| | Comparative Example 1 | Comparative Example 2 |
|---|---|---|
| layer structure | first resin layer / second resin layer | second resin layer / first resin layer |
| first resin layer | | |
| first absorbing layer | non | non |
| average value of transmittance at 400-425nm | | |
| first reflecting layer | | |
| coating liquid | L3 | L1 |
| birefringence Δn1 | 0.12 | 0.23 |
| center wavelength of selective reflection band | 725nm | 725nm |
| circular polarized light to be reflected | clockwise | clockwise |

(continued)

| | Comparative Example 1 | Comparative Example 2 |
|---|---|---|
| layer structure | first resin layer / second resin layer | second resin layer / first resin layer |
| average value of transmittance at 400-425nm | 95% | 85% |
| average value of transmittance at 400-425nm of entire first resin layer | 95% | 85% |
| second resin layer | | |
| second absorbing layer | non | non |
| average value of transmittance at 400-425nm | | |
| second reflecting layer | | |
| coating liquid | L4 | L2 |
| birefringence Δn2 | 0.12 | 0.23 |
| center wavelength of selective reflection band | 450nm | 450nm |
| circular polarized light to be reflected | clockwise | clockwise |
| layer on viewing side | first resin layer | non |
| average value of transmittance at 400-425nm of entirety of layer on viewing side | 95% | 100% |
| chroma C*(θ=5°) of blue | 55 | 40 |
| chroma C*(θ=60°) of red | 14 | 11 |
| θ(°) at which a shift to red region occurs | 55 | 50 |

From the aforementioned results, the following matters are understood.

In the layered body according to Examples including on the viewing side the first resin layer that contains the layer of the first cholesteric liquid crystal resin having a center wavelength of the selective reflection band of 700 nm or longer and 900 nm or shorter and that has an average value of the light transmittance at a wavelength of 400 nm or longer and 425 nm or shorter of 80% or more and 88% or less, the viewing angle θ (°) at which reflected light shifts from the color in the blue region as the color on the short wavelength side to the color in the red region as the color on the long wavelength side is small.

In the layered body according to Comparative Example 1 including on the viewing side the resin layer having an average value of the light transmittance at a wavelength of 400 nm or longer and 425 nm or shorter not being 50% or more and 90% or less and in the layered body according to Comparative Example 2 including on the viewing side the resin layer that contains the layer of the cholesteric liquid crystal resin having a center wavelength of the selective reflection band not being 700 nm or longer and 900 nm or shorter, the viewing angle θ (°) at which reflected light shifts from the color in the blue region as the color on the short wavelength side to the color in the red region as the color on the long wavelength side is larger than those of Examples.

In the layered body according to Example 2 in which the birefringence Δn1 of the liquid crystal composition forming the first resin layer is less than 0.15, the chroma of red reflected light observed in an oblique direction (viewing angle θ = 60°) is larger than that of Example 1 in which both the birefringences Δn1 and Δn2 are 0.15 or more.

In the layered body according to Example 3 in which the birefringence Δn2 of the liquid crystal composition forming the second resin layer is less than 0.15, the chroma of blue reflected light observed in the vicinity of the front direction is larger than that of Example 1 in which both the birefringences Δn1 and Δn2 are 0.15 or more.

Also, it is understood that in the layered bodies according to Examples 1 to 4 in which the average value of the light transmittance at a wavelength of 400 nm or longer and 425 nm or shorter is 80% or more and 88% or less in an entirety of a layer (first resin layer) placed closer to the viewing side than the layer containing the second cholesteric

liquid crystal resin, the viewing angle θ (°) at which reflected light shifts from the color in the blue region as the color on the short wavelength side to the color in the red region as the color on the long wavelength side is smaller than those of the layered bodies according to Comparative Examples 1 and 2.

[Example 5]

(Lamination of first resin layer)

The layer of the cholesteric liquid crystal resin included in the transferred body 1 obtained in Production Example 1 was bonded to a black PET film with a tackiness layer (manufactured by Tomoegawa Co.) through the tackiness layer. Thereafter, the support body was removed, and thus the layer of the cholesteric liquid crystal resin as the first resin layer was transferred onto the black PET film assumed as an article to which the identification medium is to be stuck.

(Lamination of second resin layer)

The layer of the cholesteric liquid crystal resin included in the transferred body 2 obtained in Production Example 2 was bonded to the first resin layer through a tackiness agent ("CS9621T" manufactured by Nitto Denko Corporation). Thereafter, the support body was removed, and thus the layer of the cholesteric liquid crystal resin was laminated onto the first resin layer. Thus, an intermediate layered body having a layer structure of (layer of second cholesteric liquid crystal resin) / (tackiness layer) / (first resin layer containing first cholesteric liquid crystal resin) / (tackiness layer) / (black PET film) was obtained. Next, the resin layer A1 included in the transferred body A1 obtained in Production Example A1 was bonded to the layer of the second cholesteric liquid crystal resin included in the intermediate layered body through a tackiness agent ("CS9621T" manufactured by Nitto Denko Corporation). Thereafter, the glass plate as the support body was removed, and thus the resin layer A1 was laminated onto the layer of the second cholesteric liquid crystal resin. Thus, a layered body having a layer structure of (resin layer A1) / (tackiness layer) / (layer of second cholesteric liquid crystal resin) / (tackiness layer) / (first resin layer containing first cholesteric liquid crystal resin) / (tackiness layer) / (black PET film) was obtained. In this layered body, the resin layer A1 corresponds to the absorbing layer, and the layer of the second cholesteric liquid crystal resin corresponds to the reflecting layer.

[Result of Example 5]

The following Table 9 shows the layer structure and the evaluation result of Example 5.

In the following table, "Layer on viewing side" means a layer closer to the viewing side than the layer containing the second cholesteric liquid crystal resin.

[Table 9]

Table 9

| | Example 5 |
|---|---|
| layer structure | second resin layer (second absorbing layer / second reflecting layer) / first resin layer |
| first resin layer | |
| first absorbing layer | non |
| average value of transmittance at 400-425nm | - |
| first reflecting layer | |
| coating liquid | L1 |
| birefringence Δn1 | 0.23 |
| center wavelength of selective reflection band | 725nm |
| circular polarized light to be reflected | clockwise |

(continued)

| | Example 5 |
|---|---|
| layer structure | second resin layer (second absorbing layer / second reflecting layer) / first resin layer |
| average value of transmittance at 400-425nm | 85% |
| average value of transmittance at 400-425nm of entire first resin layer | 85% |
| second resin layer | |
| second absorbing layer | A1 |
| average value of transmittance at 400-425nm | 88% |
| second reflecting layer | |
| coating liquid | L2 |
| birefringence $\Delta n2$ | 0.23 |
| center wavelength of selective reflection band | 450nm |
| circular polarized light to be reflected | clockwise |
| layer on viewing side | second absorbing layer |
| average value of transmittance at 400-425nm of entirety of layer on viewing side | 88% |
| chroma C*($\theta$=5°) of blue | 40 |
| chroma C*($\theta$=60°) of red | 11 |
| $\theta$(°) at which a shift to red region occurs | 35 |

As understood from the result in Table 9, in the layered body according to Example 5 in which the average value of the light transmittance at a wavelength of 400 nm or longer and 425 nm or shorter is 80% or more and 88% or less in a layer (that is, the second absorbing layer) closer to the viewing side than a layer (that is, the second reflecting layer) containing the second cholesteric liquid crystal resin, the viewing angle $\theta$ (°) at which reflected light shifts from the color in the blue region as the color on the short wavelength side to the color in the red region as the color on the long wavelength side is smaller than those of the layered bodies according to Comparative Examples 1 and 2.

[Example 6]

(Production of first pigment)

As a substrate film, a long-length polyethylene terephthalate film having an isotropic in-plane refractive index ("PET film A4100" manufactured by Toyobo Co.; thickness 100 $\mu$m) was prepared. This substrate film was mounted on a feeding area of a film conveyor. While the substrate film is conveyed in the long-length direction, the following operation was performed. First, a rubbing treatment was performed in a long-length direction which is parallel to the conveyance direction. Next, the coating liquid L1 prepared in Production Example 1 was applied onto the rubbing-treated surface using a die coater. Accordingly, a film of a liquid crystal composition in an uncured state was formed on one surface of the substrate film.

The obtained film of the liquid crystal composition was conveyed in an oven to perform an orientation treatment at 140°C for 2 minutes. The film was irradiated with ultraviolet light by a high pressure mercury lamp under the following conditions.

· under a nitrogen atmosphere with an oxygen gas concentration of 400 ppm or less
· 280 mW/$cm^2$ in illuminance at a wavelength of 365 nm

· 2300 mJ/cm$^2$ in exposure at a wavelength of 365 nm

This completely cured the film of the liquid crystal composition to obtain a multilayer film including a resin thin film having a thickness of 3μ on one surface of the long-length substrate film.

The multilayer film was conveyed while it was folded at an acute angle, and air was blown to the multilayer film being conveyed. Accordingly, the resin thin film formed on the substrate film was peeled from the substrate film to obtain a resin piece. The obtained resin piece was collected and pulverized by a cutter mill to obtain a resin powder. The obtained resin powder was classified through a sieve having openings of 51 μm. Only the sieved-out particles were collected to obtain a pigment P1 as the first pigment.

(Production of second pigment)

A pigment P2 as the second pigment was obtained by the same manner as that of the production of the first pigment except for the following matters.

· The coating liquid L2 prepared in Production Example 2 was used instead of the coating liquid L1.

(Production of layered body)

The pigment P1 and the pigment P2 were mixed at a ratio of 1:1 to obtain a mixed pigment. The mixed pigment and an ultraviolet curable binder ("Raycure OP 4300-2 series": manufactured by Jujo Chemical Co.) were mixed to obtain an ink having a solid content ratio of 10% by weight. The ink was used to perform screen printing onto a black paper sheet. The lines per inch of a screen-printing plate was 120.

The ink printed on the black paper sheet was irradiated with ultraviolet light by a high pressure mercury lamp under the following conditions to cure the ink to form a pigment layer on the black paper sheet.

· under a nitrogen atmosphere with an oxygen gas concentration of 400 ppm or less
· 280 mW/cm$^2$ in illuminance at a wavelength of 365 nm
· 400 mJ/cm$^2$ in exposure at a wavelength of 365 nm

The obtained pigment layer on the black paper sheet and the resin layer A1 included in the transferred body A1 obtained in Production Example A1 were bonded together through a tackiness agent ("CS9621T" manufactured by Nitto Denko Corporation). After that, the glass plate as the support body was removed, and thus the resin layer A1 was laminated onto the pigment layer. Accordingly, a layered body having a layer structure of (resin layer A1) / (tackiness layer)/(pigment layer) / (black paper sheet) was obtained. In this layered body, the resin layer A1 corresponds to the absorbing layer. Also, the pigment layer contains the first pigment and the second pigment.

[Result of Example 6]

Table 10 illustrates the layer structure and the evaluation result of Example 6. In the following table, "Layer on viewing side" means a layer closer to the viewing side than the layer (that is, the pigment layer) containing the second cholesteric liquid crystal resin.

[Table 10]

Table 10

| | Example 6 |
|---|---|
| layer structure | absorbing layer / pigment layer |
| absorbing layer | A1 |
| average value of transmittance at400-425nm | 88% |
| pigment layer | |
| first pigment | |

(continued)

| | Example 6 |
|---|---|
| coating liquid | L1 |
| birefringence $\Delta n1$ | 0.23 |
| center wavelength of selective reflection band | 720nm |
| circular polarized light to be reflected | clockwise |
| average value of transmittance at 400-425nm | 85% |
| second pigment | |
| coating liquid | L2 |
| birefringence $\Delta n2$ | 0.23 |
| center wavelength of selective reflection band | 445nm |
| circular polarized light to be reflected | clockwise |
| layer on viewing side | absorbing layer |
| average value of transmittance at 400-425nm of entirety of layer on viewing side | 88% |
| chroma C*($\theta$=5°) of blue | 31 |
| chroma C*($\theta$=60°) of red | 8 |
| $\theta$(°) at which a shift to red region occurs | 40 |

As understood from the result in Table 10, in the layered body according to Example 6 in which the average value of the light transmittance at a wavelength of 400 nm or longer and 425 nm or shorter is 80% or more and 88% or less in a layer (absorbing layer) closer to the viewing side than a layer (pigment layer) containing the second cholesteric liquid crystal resin, the viewing angle $\theta$(°) at which reflected light shifts from the color in the blue region as the color on the short wavelength side to the color in the red region as the color on the long wavelength side is smaller than those of the layered bodies according to Comparative Examples 1 and 2.

The aforementioned results demonstrate that in the identification medium according to the present invention, the viewing angle at which reflected light shifts from the short wavelength side to the long wavelength side is small.

Reference Sign List

| | |
|---|---|
| 10, 30, 50 and 70 | article |
| 20, 40, 60 and 80 | identification article |
| 100 | identification medium |
| 110 | first resin layer |
| 120 | second resin layer |
| 200 | identification medium |
| 210 | first resin layer |
| 211 | absorbing layer |
| 212 | reflecting layer |
| 220 | second resin layer |
| 300 | identification medium |
| 310 | first resin layer |
| 320 | second resin layer |
| 321 | absorbing layer |
| 322 | reflecting layer |
| 400 | identification medium |
| 410 | first pigment |
| 420 | second pigment |
| 430 | pigment layer |

440 absorbing layer

## Claims

1. An identification medium [100, 200, 300, 400] comprising a first resin layer [110, 210, 310] and a second resin layer [120, 220, 320] in this order from a viewing side, wherein

    the first resin layer [110, 210, 310] contains a first cholesteric liquid crystal resin that is a cured product of a first liquid crystal composition, and the first cholesteric liquid crystal resin selectively reflects light at a wavelength of 700 nm or longer and 900 nm or shorter,
    the second resin layer [120, 220, 320] contains a second cholesteric liquid crystal resin that is a cured product of a second liquid crystal composition, and the second cholesteric liquid crystal resin selectively reflects light at a wavelength of 400 nm or longer and 500 nm or shorter, and
    **characterized in that**:
    the first resin layer [110, 210, 310] has an average value of light transmittance at a wavelength of 400 nm or longer and 425 nm or shorter of 80% or more and 88% or less.

2. The identification medium [100, 200, 300, 400] according to claim 1, wherein the first resin layer [210] is a multilayer body including a reflecting layer [212] containing the first cholesteric liquid crystal resin, and an absorbing layer [211] having an average value of light transmittance at a wavelength of 400 nm or longer and 425 nm or shorter of 80% or more and 88% or less.

3. The identification medium [100, 200, 300, 400] according to claim 1, wherein the first resin layer [110, 210, 310] is a monolayer body.

4. An identification medium [100, 200, 300, 400] comprising a second resin layer [320] and a first resin layer [310] in this order from a viewing side, wherein

    the first resin layer [310] contains a first cholesteric liquid crystal resin that is a cured product of a first liquid crystal composition, and the first cholesteric liquid crystal resin selectively reflects light at a wavelength of 700 nm or longer and 900 nm or shorter,
    the second resin layer [320] contains a second cholesteric liquid crystal resin that is a cured product of a second liquid crystal composition, and the second cholesteric liquid crystal resin selectively reflects light at a wavelength of 400 nm or longer and 500 nm or shorter,
    **characterized in that**:

        the second resin layer [320] is a multilayer body including a reflecting layer containing the second cholesteric liquid crystal resin [322], and an absorbing layer [321] having an average value of light transmittance at a wavelength of 400 nm or longer and 425 nm or shorter of 80% or more and 88% or less, and
        the reflecting layer [322] is disposed between the absorbing layer [321] and the first resin layer [310].

5. An identification medium comprising a pigment layer [430], wherein

    the pigment layer [430] contains a first pigment [410] and a second pigment [420],
    the first pigment [410] contains a first cholesteric liquid crystal resin that is a cured product of a first liquid crystal composition,
    the first cholesteric liquid crystal resin selectively reflects light at a wavelength of 700 nm or longer and 900 nm or shorter,
    the second pigment [420] contains a second cholesteric liquid crystal resin that is a cured product of a second liquid crystal composition,
    the second cholesteric liquid crystal resin selectively reflects light at a wavelength of 400 nm or longer and 500 nm or shorter, and
    **characterized in that** the identification medium further comprises an absorbing layer [440] located on a viewing side with respect to the pigment layer [430], wherein
    the absorbing layer [440] has an average value of light transmittance at a wavelength of 400 nm or longer and 425 nm or shorter of 80% or more and 88% or less.

6. The identification medium [100, 200, 300, 400] according to any one of claims 1, 3, and 5, wherein the first liquid crystal composition contains a compound represented by the following formula (1):

$$R^3\text{-}C^3\text{-}D^3\text{-}C^5\text{-}M\text{-}C^6\text{-}D^4\text{-}C^4\text{-}R^4 \qquad \text{Formula (1)}$$

in the formula (1),

$R^3$ and $R^4$ each independently represent a group selected from the group consisting of a (meth)acrylic group, a (thio)epoxy group, an oxetane group, a thietanyl group, an aziridinyl group, a pyrrole group, a vinyl group, an allyl group, a fumarate group, a cinnamoyl group, an oxazoline group, a mercapto group, an iso(thio)cyanate group, an amino group, a hydroxyl group, a carboxyl group, and an alkoxysilyl group,
$D^3$ and $D^4$ each independently represent a group selected from the group consisting of a single bond, a linear or branched alkyl group having 1 to 20 carbon atoms, and a linear or branched alkylene oxide group having 1 to 20 carbon atoms,
$C^3$ to $C^6$ each independently represent a group selected from the group consisting of a single bond, -O-, -S-, -S-S-, -CO-, -CS-, -OCO-, $-CH_2-$, $-OCH_2-$, -CH=N-N=CH-, -NHCO-, - O-(C=O)-O-, $-CH_2-(C=O)-O-$, and $-CH_2O-(C=O)-$,
M represents a group in which two to four identical or different skeletons which may be unsubstituted or may have a substituent and which are selected from the group consisting of azomethines, azoxys, phenyls, biphenyls, terphenyls, naphthalenes, anthracenes, benzoic acid esters, cyclohexane carboxylic acid phenyl esters, cyanophenylcyclohexanes, cyano-substituted phenylpyrimidines, alkoxy-substituted phenylpyrimidines, phenyldioxanes, tolans, and alkenylcyclohexylbenzonitriles are bonded via a linking group selected from the group consisting of -O-, -S-, -S-S-, -CO-, -CS-, -OCO-, $-CH_2-$, - $OCH_2-$, -CH=N-N=CH-, -NHCO-, -O-(C=O)-O-, $-CH_2-(C=O)-O-$, and $-CH_2O-(C=O)-$,
the substituent which the M may have is a halogen atom, an alkyl group having 1 to 10 carbon atoms optionally having a substituent, a cyano group, a nitro group, $-O-R^5$, $-O-C(=O)-R^5$, $-C(=O)-O-R^5$, $-O-C(=O)-O-R^5$, $-NR^5-C(=O)-R^5$, - $C(=O)-NR^5R^7$, or $-O-C(=O)-NR^5R^7$,
$R^5$ and $R^7$ represent a hydrogen atom or an alkyl group having 1 to 10 carbon atoms,
when $R^5$ and $R^7$ are an alkyl group, the alkyl group may contain -O-, -S-, -O-C(=O)-, -C(=O)-O-, -O-C(=O)-O-, $-NR^6-C(=O)-$, $-C(=O)-NR^6-$, $-NR^6-$, or -C(=O)- interposed therein (except a case where two or more -O-'s or two or more -S-'s are adjacently interposed),
$R^6$ represents a hydrogen atom or an alkyl group having 1 to 6 carbon atoms, and
the substituent in the alkyl group having 1 to 10 carbon atoms optionally having a substituent is a halogen atom, a hydroxyl group, a carboxyl group, a cyano group, an amino group, an alkoxy group having 1 to 6 carbon atoms, an alkoxyalkoxy group having 2 to 8 carbon atoms, an alkoxyalkoxyalkoxy group having 3 to 15 carbon atoms, an alkoxycarbonyl group having 2 to 7 carbon atoms, an alkylcarbonyloxy group having 2 to 7 carbon atoms, or an alkoxycarbonyloxy group having 2 to 7 carbon atoms.

7. The identification medium [100, 200, 300, 400] according to any one of claims 1 to 6, wherein a birefringence $\Delta n1$ of the first liquid crystal composition or a birefringence $\Delta n2$ of the second liquid crystal composition is less than 0.15.

8. The identification medium [100, 200, 300, 400] according to any one of claims 1 to 7, wherein the first cholesteric liquid crystal resin and the second cholesteric liquid crystal resin are the same in a twisted direction.

9. The identification medium [100, 200, 300, 400] according to any one of claims 1 to 7, wherein the first cholesteric liquid crystal resin and the second cholesteric liquid crystal resin differ in a twisted direction.

10. A method for identifying authenticity of an identification medium [100, 200, 300, 400], comprising:

irradiating the identification medium according to any one of claims 1 to 9 with natural light;
determining whether reflected light from the identification medium changes in color from a short wavelength side to a long wavelength side when observed while increasing a viewing angle from a vicinity of a front direction; and
observing the reflected light from the identification medium through a counterclockwise circular polarizing plate and a clockwise circular polarizing plate as to one or more selected from hue, lightness, and chroma thereof, to thereby determine whether there is a difference in one or more selected from the hue, lightness, and chroma between the observation through the counterclockwise circular polarizing plate and the observation through clockwise circular polarizing plate.

**Patentansprüche**

1. Identifikationsmedium [100, 200, 300, 400], das eine erste Harzschicht [110, 210, 310] und eine zweite Harzschicht [120, 220, 320] in dieser Reihenfolge von einer Betrachtungsseite aus umfasst, wobei

   die erste Harzschicht [110, 210, 310] ein erstes cholesterisches Flüssigkristallharz enthält, das ein gehärtetes Produkt einer ersten Flüssigkristallzusammensetzung ist, und das erste cholesterische Flüssigkristallharz selektiv Licht mit einer Wellenlänge von 700 nm oder mehr und 900 nm oder weniger reflektiert,
   die zweite Harzschicht [120, 220, 320] ein zweites cholesterisches Flüssigkristallharz enthält, das ein gehärtetes Produkt einer zweiten Flüssigkristallzusammensetzung ist, und das zweite cholesterische Flüssigkristallharz selektiv Licht mit einer Wellenlänge von 400 nm oder mehr und 500 nm oder weniger reflektiert, und

   **dadurch gekennzeichnet, dass**:
   die erste Harzschicht [110, 210, 310] einen Durchschnittswert der Lichtdurchlässigkeit bei einer Wellenlänge von 400 nm oder mehr und 425 nm oder weniger von 80 % oder mehr und 88 % oder weniger aufweist.

2. Identifikationsmedium [100, 200, 300, 400] nach Anspruch 1, wobei die erste Harzschicht [210] ein mehrschichtiger Körper ist, der eine reflektierende Schicht [212], die das erste cholesterische Flüssigkristallharz enthält, und eine absorbierende Schicht [211] mit einem Durchschnittswert der Lichtdurchlässigkeit bei einer Wellenlänge von 400 nm oder mehr und 425 nm oder weniger von 80 % oder mehr und 88 % oder weniger aufweist.

3. Identifikationsmedium [100, 200, 300, 400] nach Anspruch 1, wobei die erste Harzschicht [110, 210, 310] ein einlagiger Körper ist.

4. Identifikationsmedium [100, 200, 300, 400], das eine zweite Harzschicht [320] und eine erste Harzschicht [310] in dieser Reihenfolge von einer Betrachtungsseite aus umfasst, wobei

   die erste Harzschicht [310] ein erstes cholesterisches Flüssigkristallharz enthält, das ein gehärtetes Produkt einer ersten Flüssigkristallzusammensetzung ist, und das erste cholesterische Flüssigkristallharz selektiv Licht mit einer Wellenlänge von 700 nm oder mehr und 900 nm oder weniger reflektiert,
   die zweite Harzschicht [320] ein zweites cholesterisches Flüssigkristallharz enthält, das ein gehärtetes Produkt einer zweiten Flüssigkristallzusammensetzung ist, und das zweite cholesterische Flüssigkristallharz selektiv Licht mit einer Wellenlänge von 400 nm oder mehr und 500 nm oder weniger reflektiert,

   **dadurch gekennzeichnet, dass**:

   die zweite Harzschicht [320] ein mehrschichtiger Körper ist, der eine reflektierende Schicht, die das zweite cholesterische Flüssigkristallharz [322] enthält, und eine absorbierende Schicht [321] mit einem Durchschnittswert der Lichtdurchlässigkeit bei einer Wellenlänge von 400 nm oder mehr und 425 nm oder weniger von 80% oder mehr und 88% oder weniger einschließt, und
   die reflektierende Schicht [322] zwischen der absorbierenden Schicht [321] und der ersten Harzschicht [310] angeordnet ist.

5. Identifikationsmedium, das eine Pigmentschicht [430] umfasst, wobei

   die Pigmentschicht [430] ein erstes Pigment [410] und ein zweites Pigment [420] enthält,
   das erste Pigment [410] enthält ein erstes cholesterisches Flüssigkristallharz, das ein gehärtetes Produkt einer ersten Flüssigkristallzusammensetzung ist,
   das erste cholesterische Flüssigkristallharz reflektiert selektiv Licht mit einer Wellenlänge von 700 nm oder mehr und 900 nm oder weniger,
   das zweite Pigment [420] enthält ein zweites cholesterisches Flüssigkristallharz, das ein gehärtetes Produkt einer zweiten Flüssigkristallzusammensetzung ist,
   das zweite cholesterische Flüssigkristallharz selektiv Licht mit einer Wellenlänge von 400 nm oder mehr und 500 nm oder weniger reflektiert, und
   die absorbierende Schicht [440] einen Durchschnittswert der Lichtdurchlässigkeit bei einer Wellenlänge von 400 nm oder mehr und 425 nm oder weniger von 80 % oder mehr und 88 % oder weniger aufweist.

6. Identifikationsmedium [100, 200, 300, 400] nach einem der Ansprüche 1, 3 und 5, wobei die erste Flüssigkristallzusammensetzung eine durch die folgende Formel (1) dargestellte Verbindung enthält:

$R^3$-$C^3$-$D^3$-$C^5$-M-$C^6$-$D^4$-$C^4$-$R^4$ Formel (1)

wobei in der Formel (1),

$R^3$ und $R^4$ jeweils unabhängig voneinander eine Gruppe darstellen, die aus der Gruppe ausgewählt ist, bestehend aus einer (Meth)acrylgruppe, einer (Thio)epoxygruppe, einer Oxetangruppe, einer Thietanylgruppe, einer Aziridinylgruppe, einer Pyrrolgruppe, einer Vinylgruppe, einer Allylgruppe, einer Fumaratgruppe, einer Cinnamoylgruppe, einer Oxazolingruppe, einer Mercaptogruppe, einer Iso(thio)cyanatgruppe, einer Aminogruppe, einer Hydroxylgruppe, einer Carboxylgruppe und einer Alkoxysilylgruppe,
$D^3$ und $D^4$ stellen jeweils unabhängig voneinander eine Gruppe dar, die ausgewählt ist aus der Gruppe bestehend aus einer Einfachbindung, einer linearen oder verzweigten Alkylgruppe mit 1 bis 20 Kohlenstoffatomen und einer linearen oder verzweigten Alkylenoxidgruppe mit 1 bis 20 Kohlenstoffatomen,
$C^3$ bis $C^6$ jeweils unabhängig voneinander eine Gruppe, ausgewählt aus der Gruppe bestehend aus einer Einfachbindung, -O-, -S-, -S-S-, -CO-, -CS-, -OCO-, $-CH_2-$, $-OCH_2-$, -CH=N-N=CH-, -NHCO-, -O-(C=O)-O-, $-CH_2$-(C=O)-O- und $-CH_2O$-(C=O)-,
M eine Gruppe darstellt, in der zwei bis vier gleiche oder verschiedene Gerüste, die unsubstituiert sein oder einen Substituenten aufweisen können und die ausgewählt sind aus der Gruppe bestehend aus Azomethinen, Azoxys, Phenylen, Biphenylen, Terphenylen, Naphthalinen, Anthracenen, Benzoesäureestern, Cyclohexancarbonsäurephenylestern, Cyanophenylcyclohexane, Cyano-substituierte Phenylpyrimidine, Alkoxy-substituierte Phenylpyrimidine, Phenyldioxane, Tolane, und Alkenylcyclohexylbenzonitrile, die über eine Verknüpfungsgruppe, ausgewählt aus der Gruppe bestehend aus -O-, -S-, -S-S-, -CO-, -CS-, -OCO-, $-CH_2-$, $-OCH_2-$, -CH=N-N=CH-, -NHCO-, -O-(C=O)-O-, $-CH_2$-(C=O)-O- und $-CH_2O$-(C=O)-, gebunden sind,
der Substituent, den M aufweisen kann, ein Halogenatom ist, eine Alkylgruppe mit 1 bis 10 Kohlenstoffatomen, die gegebenenfalls einen Substituenten aufweist, eine Cyanogruppe, eine Nitrogruppe, -O-$R^5$, -O-C(=O)-$R^5$, -C(=O)-O-$R^5$, -O-C(=0)-O-R5, -N$R^5$-C(=O)-$R^5$, -C(=O)-N$R^5R^7$, oder -O-C(=O)-N$R^5R^7$,
$R^5$ und $R^7$ stehen für ein Wasserstoffatom oder eine Alkylgruppe mit 1 bis 10 Kohlenstoffatomen,
wenn $R^5$ und $R^7$ eine Alkylgruppe sind, kann die Alkylgruppe -O-, -S-, -O-C(=O)-, -C(=O)-O-, -O-C(=O)-O-, -N$R^6$-C(=O)-, -C(=O)-N$R^6$-, -N$R^6$- oder -C(=O)- darin eingefügt sein (außer in einem Fall, in dem zwei oder mehr -O-'s oder zwei oder mehr -S-'s nebeneinander eingefügt sind),
$R^6$ ein Wasserstoffatom oder eine Alkylgruppe mit 1 bis 6 Kohlenstoffatomen darstellt, und
der Substituent in der Alkylgruppe mit 1 bis 10 Kohlenstoffatomen, der gegebenenfalls einen Substituenten aufweist, ein Halogenatom, eine Hydroxylgruppe, eine Carboxylgruppe, eine Cyanogruppe, eine Aminogruppe, eine Alkoxygruppe mit 1 bis 6 Kohlenstoffatomen, eine Alkoxyalkoxygruppe mit 2 bis 8 Kohlenstoffatomen, eine Alkoxyalkoxyalkoxygruppe mit 3 bis 15 Kohlenstoffatomen, eine Alkoxycarbonylgruppe mit 2 bis 7 Kohlenstoffatomen, eine Alkylcarbonyloxygruppe mit 2 bis 7 Kohlenstoffatomen oder eine Alkoxycarbonyloxygruppe mit 2 bis 7 Kohlenstoffatomen ist.

**7.** Identifikationsmedium [100, 200, 300, 400] nach einem der Ansprüche 1 bis 6, wobei eine Doppelbrechung $\Delta$n1 der ersten Flüssigkristallzusammensetzung oder eine Doppelbrechung $\Delta$n2 der zweiten Flüssigkristallzusammensetzung weniger als 0,15 beträgt.

**8.** Identifikationsmedium [100, 200, 300, 400] nach einem der Ansprüche 1 bis 7, wobei das erste cholesterische Flüssigkristallharz und das zweite cholesterische Flüssigkristallharz in einer verdrehten Richtung gleich sind.

**9.** das Identifikationsmedium [100, 200, 300, 400] nach einem der Ansprüche 1 bis 7, wobei sich das erste cholesterische Flüssigkristallharz und das zweite cholesterische Flüssigkristallharz in einer verdrehten Richtung unterscheiden.

**10.** Verfahren zur Identifizierung der Echtheit eines Identifikationsmediums [100, 200, 300, 400], umfassend:

Bestrahlung des Identifikationsmediums nach einem der Ansprüche 1 bis 9 mit natürlichem Licht;
Bestimmen, ob das von dem Identifikationsmedium reflektierte Licht seine Farbe von einer Seite mit kurzer Wellenlänge zu einer Seite mit langer Wellenlänge ändert, wenn es unter Vergrößerung des Betrachtungswinkels aus der Nähe einer Frontrichtung beobachtet wird; und
Beobachten des vom Identifikationsmedium reflektierten Lichts durch eine zirkulare Polarisationsplatte im Gegenuhrzeigersinn und eine zirkulare Polarisationsplatte im Uhrzeigersinn hinsichtlich eines oder mehrerer aus Farbton, Helligkeit und Buntheit ausgewählter Elemente, um dadurch zu bestimmen, ob es einen Unterschied

in einem oder mehreren aus Farbton, Helligkeit und Buntheit ausgewählten Elementen zwischen der Beobachtung durch die zirkulare Polarisationsplatte im Gegenuhrzeigersinn und der Beobachtung durch die zirkulare Polarisationsplatte im Uhrzeigersinn gibt.

## Revendications

1. Support d'identification [100, 200, 300, 400] comprenant une première couche de résine [110, 210, 310] et une deuxième couche de résine [120, 220, 320] dans cet ordre depuis un côté d'observation, dans lequel

   la première couche de résine [110, 210, 310] contient une première résine à cristaux liquides cholestériques qui est un produit durci d'une première composition de cristaux liquides, et la première résine à cristaux liquides cholestériques réfléchit sélectivement la lumière à une longueur d'onde supérieure ou égale à 700 nm et inférieure ou égale à 900 nm,
   la deuxième couche de résine [120, 220, 320] contient une deuxième résine à cristaux liquides cholestériques qui est un produit durci d'une deuxième composition de cristaux liquides, et la deuxième résine à cristaux liquides cholestériques réfléchit sélectivement la lumière à une longueur d'onde supérieure ou égale à 400 nm et inférieure ou égale à 500 nm, et
   **caractérisé en ce que** :
   la première couche de résine [110, 210, 310] a une valeur moyenne de transmission de la lumière à une longueur d'onde supérieure ou égale à 400 nm et inférieure ou égale à 425 nm supérieure ou égale à 80 % et inférieure ou égale à 88 %.

2. Support d'identification [100, 200, 300, 400] selon la revendication 1, dans lequel la première couche de résine [210] est un corps multicouche comprenant une couche réfléchissante [212] contenant la première résine à cristaux liquides cholestériques, et une couche absorbante [211] ayant une valeur moyenne de transmission de la lumière à une longueur d'onde supérieure ou égale à 400 nm et inférieure ou égale à 425 nm supérieure ou égale à 80 % et inférieure ou égale à 88 %.

3. Support d'identification [100, 200, 300, 400] selon la revendication 1, dans lequel la première couche de résine [110, 210, 310] est un corps monocouche.

4. Support d'identification [100, 200, 300, 400] comprenant une deuxième couche de résine [320] et une première couche de résine [310] dans cet ordre depuis un côté d'observation, dans lequel

   la première couche de résine [310] contient une première résine à cristaux liquides cholestériques qui est un produit durci d'une première composition de cristaux liquides, et la première résine à cristaux liquides cholestériques réfléchit sélectivement la lumière à une longueur d'onde supérieure ou égale à 700 nm et inférieure ou égale à 900 nm, la deuxième couche de résine (320) contient une deuxième résine à cristaux liquides cholestériques qui est un produit durci d'une deuxième composition de cristaux liquides, et la deuxième résine à cristaux liquides cholestériques réfléchit sélectivement la lumière à une longueur d'onde supérieure ou égale à 400 nm et inférieure ou égale à 500 nm,
   **caractérisé en ce que** :

      la deuxième couche de résine [320] est un corps multicouche comprenant une couche réfléchissante contenant la deuxième résine à cristaux liquides cholestériques [322], et une couche absorbante [321] ayant une valeur moyenne de transmission de la lumière à une longueur d'onde supérieure ou égale à 400 nm et inférieure ou égale à 425 nm supérieure ou égale à 80 % et inférieure ou égale à 88 %, et
      la couche réfléchissante [322] est disposée entre la couche absorbante [321] et la première couche de résine [310].

5. Support d'identification comprenant une couche de pigment [430] dans lequel

   la couche de pigment [430] contient un premier pigment [410] et un deuxième pigment [420],
   le premier pigment [410] contient une première résine à cristaux liquides cholestériques qui est un produit durci d'une première composition de cristaux liquides,
   la première résine à cristaux liquides cholestériques réfléchit sélectivement la lumière à une longueur d'onde supérieure ou égale à 700 nm et inférieure ou égale à 900 nm,

le deuxième pigment [420] contient une deuxième résine à cristaux liquides cholestériques qui est un produit durci d'une deuxième composition de cristaux liquides,
la deuxième résine à cristaux liquides cholestériques réfléchit sélectivement la lumière à une longueur d'onde supérieure ou égale à 400 nm et inférieure ou égale à 500 nm, et
**caractérisé en ce que** le support d'identification comprend en outre une couche absorbante [440] située sur un côté d'observation par rapport à la couche de pigment [430], dans lequel
la couche absorbante [440] a une valeur moyenne de transmission de la lumière à une longueur d'onde supérieure ou égale à 400 nm et inférieure ou égale à 425 nm supérieure ou égale à 80 % et inférieure ou égale à 88 %.

**6.** Support d'identification [100, 200, 300, 400] selon l'une quelconque des revendications 1, 3 et 5, dans lequel la première composition de cristaux liquides contient un composé représenté par la formule (1) suivante :

$$R^3\text{-}C^3\text{-}D^3\text{-}C^5\text{-}MC^6\text{-}D^4\text{-}C^4\text{-}R^4 \qquad \text{Formule (1)}$$

dans la formule (1),

$R^3$ et $R^4$ représentent chacun indépendamment un groupe choisi dans le groupe constitué d'un groupe (méth)acrylique, un groupe (thio)époxy, un groupe oxétane, un groupe thiétanyle, un groupe aziridinyle, un groupe pyrrole, un groupe vinyle, un groupe allyle, un groupe fumarate, un groupe cinnamoyle, un groupe oxazoline, un groupe mercapto, un groupe iso(thio)cyanate, un groupe amino, un groupe hydroxyle, un groupe carboxyle et un groupe alcoxysilyle,
$D^3$ et $D^4$ représentent chacun indépendamment un groupe choisi dans le groupe constitué d'une simple liaison, un groupe alkyle linéaire ou ramifié ayant 1 à 20 atomes de carbone, et un groupe oxyde d'alkylène linéaire ou ramifié ayant 1 à 20 atomes de carbone,
$C^3$ à $C^6$ représentent chacun indépendamment un groupe choisi dans le groupe constitué d'une simple liaison, -O-, -S-, -S-S- , -CO-, -CS-, -OCO-, $-CH_2-$, $-OCH_2-$, -CH=N-N=CH-, -NHCO-, -O-(C=O)-O-, $-CH_2-(C=O)-O-$ et $-CH_2O-(C=O)-$,
M représente un groupe dans lequel deux à quatre squelettes identiques ou différents, qui peuvent être non substitués ou peuvent comporter un substituant, et qui sont choisis dans le groupe constitué des azométhines, azoxys, phényles, biphényles, terphényles, naphtalènes, anthracènes, esters d'acide benzoïque, esters phényliques d'acide cyclohexanecarboxylique, cyanophénylcyclohexanes, phénylpyrimidines cyano-substituées, phénylpyrimidines alcoxy-substituées, phényldioxanes, tolanes et alcénylcyclohexylbenzonitriles, sont liés via un groupe de liaison choisi dans le groupe constitué de -O-, -S-, -S-S-, -CO-, -CS-, -OCO-, $-CH_2-$, $-OCH_2-$, -CH=N-N=CH-, -NHCO-, - O-(C=O)-O-, $-CH_2-(C=O)-O-$ et $-CH_2O-(C=O)-$,
le substituant que M peut avoir est un atome d'halogène, un groupe alkyle ayant 1 à 10 atomes de carbone ayant éventuellement un substituant, un groupe cyano, un groupe nitro, $-O-R^5$, $-O-C(=O)-R^5$, $-C(=O)-O-R^5$, $-O-C(=O)-O-R^5$, $-NR^5-C(=O)-R^5$, $-C(=O)-NR^5R^7$ ou $-O-C(=O)-NR^5R^7$,
$R^5$ et $R^7$ représentent un atome d'hydrogène ou un groupe alkyle ayant 1 à 10 atomes de carbone,
lorsque $R^5$ et $R^7$ sont un groupe alkyle, le groupe alkyle peut contenir -O-, -S-, - OC(=O)-, -C(=O)-O-, -OC(=O)-O-, $-NR^6-C(=O)-$, $-C(=O)-NR^6-$, $-NR^6-$, ou -C(=O)- interposé dans celui-ci (sauf dans le cas où au moins deux -O- ou au moins deux -S- sont interposés de manière adjacente),
$R^6$ représente un atome d'hydrogène ou un groupe alkyle ayant 1 à 6 atomes de carbone, et
le substituant dans le groupe alkyle ayant 1 à 10 atomes de carbone ayant éventuellement un substituant est un atome d'halogène, un groupe hydroxyle, un groupe carboxyle, un groupe cyano, un groupe amino, un groupe alcoxy ayant 1 à 6 atomes de carbone, un groupe alcoxyalcoxy ayant 2 à 8 atomes de carbone, un groupe alcoxyalcoxyalcoxy ayant 3 à 15 atomes de carbone, un groupe alcoxycarbonyle ayant 2 à 7 atomes de carbone, un groupe alkylcarbonyloxy ayant 2 à 7 atomes de carbone, ou un groupe alcoxycarbonyloxy ayant 2 à 7 atomes de carbone.

**7.** Milieu d'identification [100, 200, 300, 400] selon l'une quelconque des revendications 1 à 6, dans lequel une biréfringence $\Delta n1$ de la première composition de cristaux liquides ou une biréfringence $\Delta n2$ de la deuxième composition de cristaux liquides est inférieure à 0,15.

**8.** Support d'identification [100, 200, 300, 400] selon l'une quelconque des revendications 1 à 7, dans lequel la première résine à cristaux liquides cholestériques et la deuxième résine à cristaux liquides cholestériques sont identiques dans une direction de torsion.

**9.** Support d'identification [100, 200, 300, 400] selon l'une quelconque des revendications 1 à 7, dans lequel la première

résine à cristaux liquides cholestériques et la deuxième résine à cristaux liquides cholestériques diffèrent dans une direction de torsion.

**10.** Procédé d'identification de l'authenticité d'un support d'identification [100, 200, 300, 400], comprenant :

l'exposition du support d'identification selon l'une quelconque des revendications 1 à 9 à une lumière naturelle ;
la détermination du fait que la lumière réfléchie par le support d'identification change ou non de couleur d'un côté de longueur d'onde courte à un côté de longueur d'onde longue lorsqu'il est observé en augmentant un angle d'observation depuis le voisinage d'une direction avant ; et
l'observation de la lumière réfléchie par le support d'identification à travers une plaque de polarisation circulaire dans le sens antihoraire et une plaque de polarisation circulaire horaire en termes de l'un ou plusieurs choisis parmi la teinte, la clarté et la saturation, ce qui permet de déterminer s'il existe une différence de l'un ou plusieurs choisis parmi la teinte, la clarté et la saturation entre l'observation à travers la plaque polarisante circulaire antihoraire et l'observation à travers une plaque polarisante circulaire horaire.

FIG.1

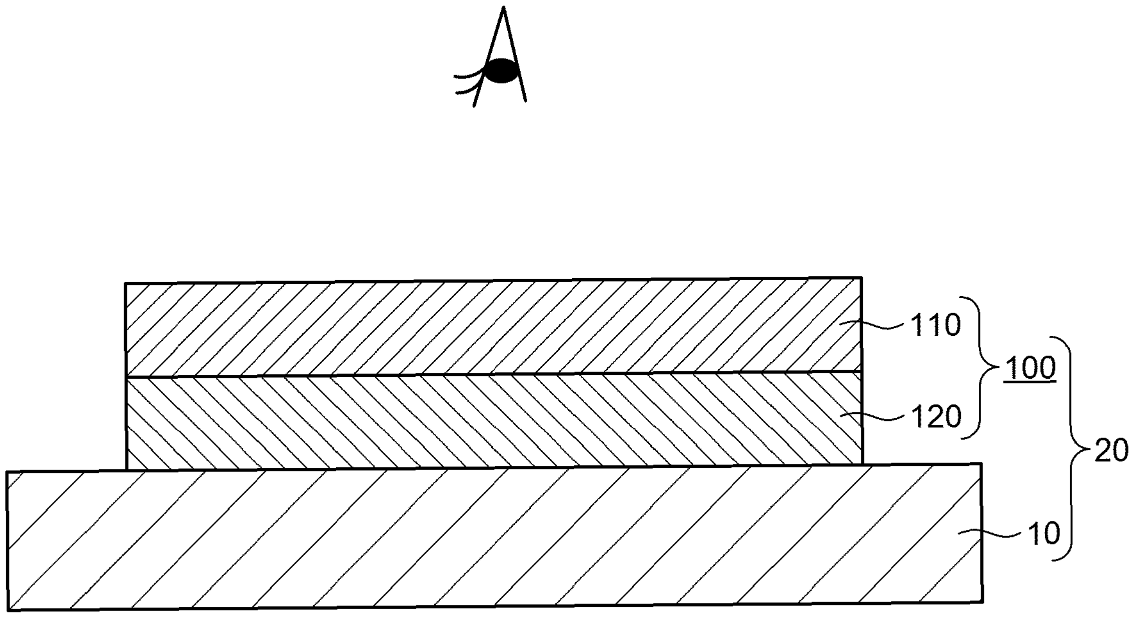


FIG.2

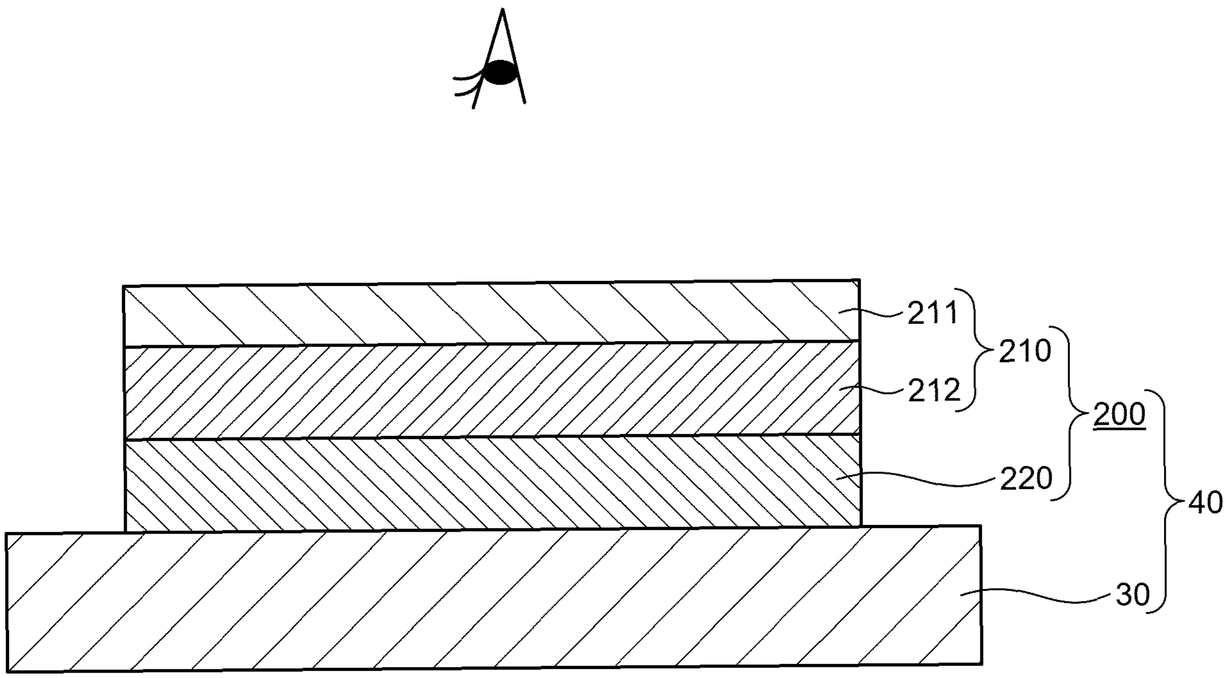

FIG.3

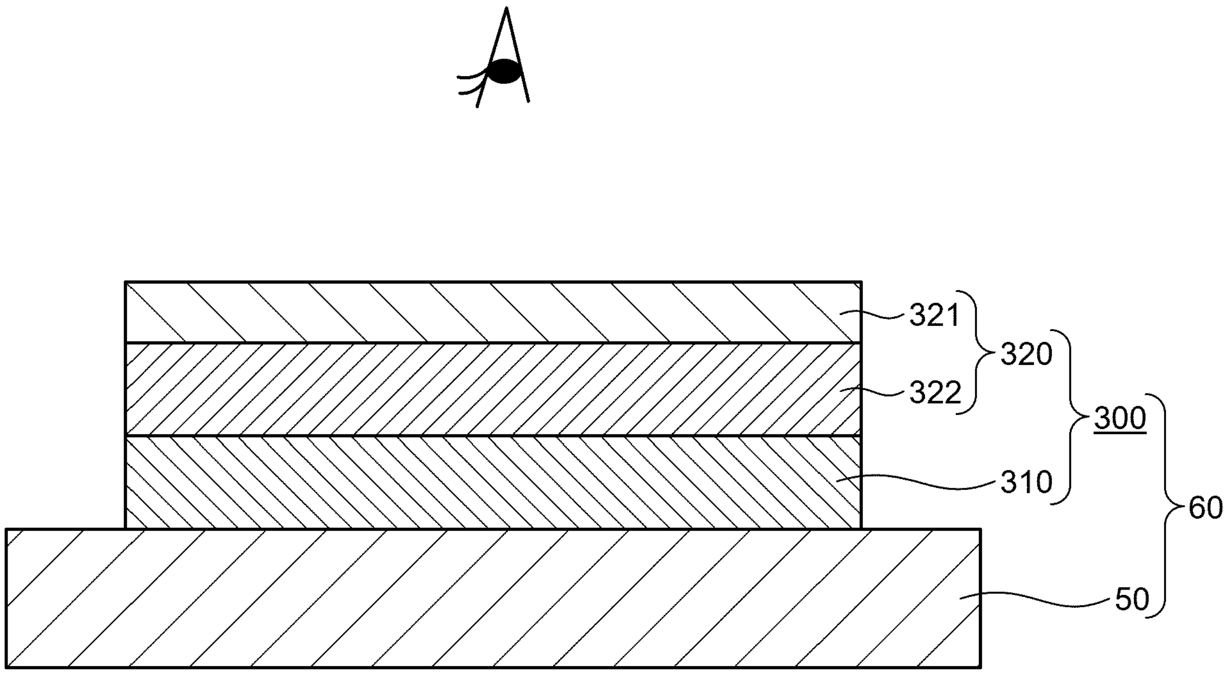


FIG.4

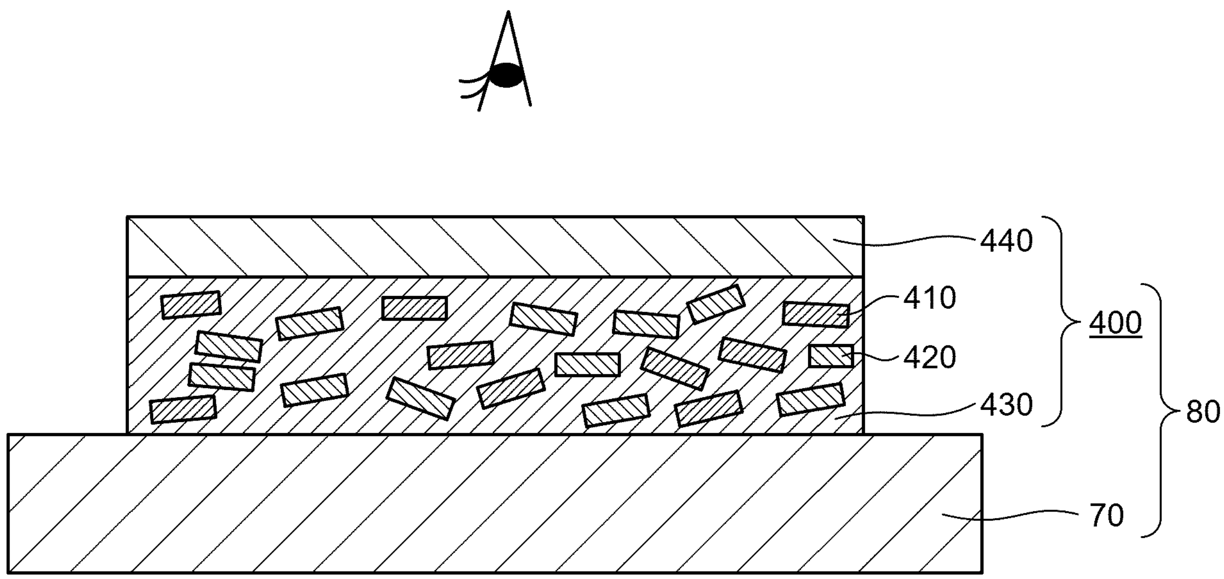

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010196005 A
- JP 2010134333 A
- US 2008054621 A1
- JP 5229056 B
- JP 2012215762 A
- EP 0720753 A1
- US 4705356 A
- JP 2005289881 A
- JP 2004115414 A
- JP 2003066214 A
- JP 2003313187 A
- JP 2003342219 A
- JP 2000290315 A
- JP HEI6072962 A
- US 6468444 B
- WO 9800428 A
- JP 2007176870 A